# EUROPÄISCHE PATENTSCHRIFT

(11) **EP 1 504 203 B1**
(45) Veröffentlichungstag und Bekanntmachung des Hinweises auf die Patenterteilung: **19.07.2006**
(21) Anmeldenummer: 03749864.9
(22) Anmeldetag: 05.05.2003
(51) Int. Cl.: F16H 3/66

(54) **6-GANG-AUTOMATGETRIEBE**
SIX-SPEED AUTOMATIC GEARBOX
TRANSMISSION AUTOMATIQUE 6 VITESSES

(30) Priorität: 11.05.2002 DE 10221096
(43) Veröffentlichungstag der Anmeldung: 09.02.2005
(73) Patentinhaber: ZF FRIEDRICHSHAFEN Aktiengesellschaft, 88038 Friedrichshafen (DE)
(72) Erfinder: BAUKNECHT, Gert, 88048 Friedrichshafen (DE); BUCKSCH, Manfred, 88046 Friedrichshafen (DE); GÄRTNER, Lutz, 88085 Langenargen (DE); SCHERER, Heribert, 88074 Meckenbeuren (DE); ZIEMER, Peter, 88069 Tettnang (DE)
(86) Internationale Anmeldenummer: PCT/EP2003/004672
(87) Internationale Veröffentlichungsnummer: WO 2003/095866

(56) Entgegenhaltungen:
- US-A- 3 941 013
- US-A- 5 106 352
- US-A- 6 139 463
- PATENT ABSTRACTS OF JAPAN vol. 2000, no. 05, 14. September 2000 (2000-09-14) -& JP 2000 055152 A (AISIN AW CO LTD), 22. Februar 2000 (2000-02-22)
- PATENT ABSTRACTS OF JAPAN vol. 2000, no. 05, 14. September 2000 (2000-09-14) & JP 2000 055151 A (AISIN AW CO LTD), 22. Februar 2000 (2000-02-22)
- PATENT ABSTRACTS OF JAPAN vol. 2002, no. 04, 4. August 2002 (2002-08-04) -& JP 2001 349390 A (AISIN AW CO LTD), 21. Dezember 2001 (2001-12-21)

## Beschreibung

Die vorliegende Erfindung betrifft ein Automatgetriebe mit sechs Vorwärtsgängen nach dem Oberbegriff des Patentanspruchs 1.

In der US 5,106,352 A sind mehrere Getriebeschemata für Automatgetriebe mit einem nicht schaltbaren Vorschalt-Planetenradsatz und einem schaltbaren Haupt-Planetenradsatz bekannt, bei dem durch selektives Schließen von fünf Schaltelementen insgesamt sechs Vorwärtsgänge ohne Gruppenschaltung schaltbar sind. Der Haupt-Planetenradsatz ist dabei als schaltbares Zweisteg-Vierwellen-Getriebe mit zwei gekoppelten Planetenradsätzen ausgebildet, in der bekannten Bauart eines Ravigneaux-Radsatzes. Der nicht schaltbare Vorschalt-Radsatz kann als Einsteg-Planetengetriebe ausgebildet sein, wobei ein Element des Vorschalt-Radsatzes - vorzugsweise sein Sonnenrad - fest mit dem Getriebegehäuse verbunden ist. Der Vorschalt-Radsatz wird mit der Eingangsdrehzahl des Getriebes angetrieben und erzeugt stets eine reduzierte Ausgangsdrehzahl, die über zwei Schaltelemente auf zwei verschiedene Elemente des Hauptradsatzes übertragbar ist. Zusätzlich ist ein drittes Element des Hauptradsatzes über eine weitere Kupplung direkt mit der Getriebeeingangsdrehzahl antreibbar.

Günstige Bauteilanordnungen für ein Automatgetriebe mit dem Radsatzkonzept der US 5,106,352 A sind beispielsweise auch aus der US 6,139,463 A und der nicht vorveröffentlichten deutschen Patentanmeldung DE 10210348.8 der Anmelderin bekannt.

Aus der US 3,941,013 A schließlich ist ein Getriebeschema eines Automatgetriebes mit sechs Vorwärtsgängen bekannt, welches einen als Einsteg-Planetengetriebe ausgebildeten schaltbaren Vorschalt-Radsatz und einen aus zwei gekoppelten Einsteg-Planetengetrieben bestehenden schaltbaren Haupt-Radsatz aufweist. Zwei der drei Eingangs-Elemente des Haupt-Radsatzes sind dabei fest miteinander verbunden. Der Vorschalt-Radsatz ist als sogenanntes Plus-Getriebe ausgebildet mit Doppelplaneten, deren Stege miteinander verbunden sind, und arbeitet bis auf den Betrieb im sechsten Gang, in dem er als Block umläuft, als Reduziergetriebe. Unter Plus-Getriebe ist dabei ein einfaches Planetengetriebe mit positiver Standgetriebe-Übersetzung zu verstehen; das Verhältnis der Drehzahlen von Hohlrad und Sonnenrad ist bei stillstehend gedachtem Steg also positiv. Das Sonnenrad des Vorschalt-Radsatzes ist über eine Bremse, die räumlich zwischen dem Vorschalt-Radsatz und dem Haupt-Radsatz angeordnet ist, am Getriebegehäuse festsetzbar. Angetrieben wird der Vorschalt-Radsatz mit der Getriebe-Eingangsdrehzahl über seine gekoppelten Stege, sein Abtrieb erfolgt über sein Hohlrad. Die Ausgangsdrehzahl des Vorschalt-Radsatzes ist über zwei Kupplungen auf zwei verschiedene Eingangs-Elemente der Haupt-Radsatzes übertragbar, wobei eines dieser beiden Eingangs-Elemente des Haupt-Radsatzes zusätzlich über eine weitere Kupplung direkt mit der Getriebe-Eingangsdrehzahl beaufschlagbar ist. Diese weitere Kupplung ist auf der dem Haupt-Radsatz abgewandten Seite des Vorschalt-Radsatzes angeordnet. Aufgrund der räumlichen Anordnung der Bremse, über welche das Sonnenrad des Vorschalt-Radsatzes festsetzbar ist, und der räumlichen Anordnung der Kupplung, über welche die Getriebe-Eingangsdrehzahl auf den Haupt-Radsatz übertragbar ist, ergibt sich eine konstruktiv aufwendige Führung von Antrieb und Abtrieb des Vorschalt-Radsatzes. So muß der Antrieb des Vorschalt-Radsatzes radial außen über dessen Hohlrad geführt werden, d. h. der Antrieb des Vorschalt-Radsatzes umgreift den Vorschatt-Radsatz komplett. Weiterhin muß der Abtrieb des Vorschalt-Radsatzes zentrisch durch das Sonnenrad des Vorschalt-Radsatzes hindurch zu den als Außenlamellenträger ausgebildeten Eingangselementen der beiden Kupplungen geführt werden. Für die Schaltung der sechs Vorwärtsgänge bedingt das Radsatzkonzept der US 3,941,013 A mehrere Gruppen-Schaltungen.

Aus der JP-A-2000-055152 schließlich ist ein Getriebeschema für ein Automatgetriebe bekannt, welches, aufbauend auf dem Getriebeschema der US 5,106,352 A, einen nicht schaltbaren, als Reduzierstufe arbeitenden Vorschalt-Planetenradsatz mit Doppelplaneten aufweist. Wie bei der US 5,106,352 A ist der Hauptradsatz als Zweisteg-Vierwellen-Planetengetriebe mit drei Eingangselementen und einem Ausgangselement ausgeführt. Diese drei Eingangselemente des Hauptradsatzes sind über fünf Schaltelemente mit der Antriebswelle und dem Ausgangselement des Vorschalt-Radatzes derart verbindbar, dass insgesamt sechs Vorwärtsgänge gruppenschaltungsfrei schaltbar sind und dabei eine große Gesamtspreizung erzielt wird. Die beiden Schaltelemente, über die das Ausgangselement des Vorschalt-Radsatzes mit den ersten beiden Eingangseternenten des Hauptradsatzes verbindbar sind, sind ineinander verschachtelt auf der Seite des Hauptradsatzes angeordnet, die dem Vorschalt-Radsatz gegenüberliegt. Das Schaltelement, über welches das dritte Eingangselement als Hauptradsatzes mit der Antriebswelle des Getriebes verbindbar ist, bildet zusammen mit dem Vorschalt-Radsatz eine Baugruppe, die antriebsnah angeordnet und vom Hauptradsatz durch eine Getriebezwischenwand und einen Stimtrieb des Getriebeabtriebs räumlich getrennt ist, wobei das Lamellenpaket dieses Schaltelements, räumlich gesehen, in einem Bereich radial über dem Vorschalt-Radsatz und die Servoeinrichtung zum Betätigen dieses Lameitenpakets auf der dem Hauptradatz abgewandten Seite des Vorschalt-Radsatzes angeordnet sind.

Die Aufgabe der Erfindung besteht nun darin, ausgehend vom gattungsgemäßen Stand der Technik der JP-A-2000-055152 ein Automatgetriebe mit sechs ohne Gruppenschaltung schaltbaren Vorwärtsgängen bei vergleichsweise geringem Bauaufwand weiterzuentwickeln, insbesondere hinsichtlich einer optimierten Schmierung des Vorschalt-Radsatzes.

Diese Aufgabe wird durch ein Automatgetriebe mit den Merkmalen des Hauptanspruchs gelöst. Vorteilhafte Ausgestaltungen und Weiterbildungen ergeben sich aus den Unteransprüchen.

Ausgehend vom gattungsgemäßen Stand der Technik der JP-A-2000-055152 weist das Automatgetriebe einen nicht schaltbaren Vorschalt-Planetenradsatz sowie einen mehrgliedrigen schaltbaren Haupt-Planetenradsatz, der beispielsweise als Zweisteg-Vierwellen-Planetengetriebe ausgebildet ist, auf. Der Haupt-Planetenradsatz umfaßt mindestens drei voneinander unabhängige Eingangs-Elemente. Ein Eingangselement des Haupt-Planetenradsatzes ist dabei über ein Schaltelement mit einer Getriebe-Eingangswelle verbindbar. Die anderen beiden Eingangselemente des Haupt-Planetenradsatzes sind über jeweils ein weiteres Schaltelement mit einem Ausgangselement des Vorschalt-Planetenradsatzes verbindbar.

im Unterschied zum Stand der Technik der US 3,941,013 kann also das Eingangselement des Haupt-Planetenradsatzes, welches mit der GetriebeEingangswelle verbindbar ist, nie mit dem Ausgangselement des Vorschalt-Planetenradsatzes verbunden werden.

Wie beim gattungsgemäßen Stand der Technik der JP-A-2000-055152 ist der Vorschalt-Planetenradsatz als nicht schaltbares Plus-Getriebe ausgebildet, mit Doppelplaneten, deren Stege miteinander verbunden sind. Unter Plus-Getriebe ist dabei ein einfaches Planetengetriebe mit positiver Standgetriebe-Übersetzung zu verstehen; das Verhältnis der Drehzahlen von Hohlrad und Sonnenrad ist bei stillstehend gedachtem Steg also positiv. Ein Element des Vorschalt-Planetenradsatzes ist fest mit dem Getriebegehäuse verbunden.

Durch eine entsprechende Schaltungslogik von insgesamt fünf Schaltelementen sind sechs Vorwärtsgänge ohne Gruppenschaltung schaltbar. Bei einer Umschaltung von einem Gang in den nächstfolgend höheren oder nächstfolgend niedrigeren Gang wird also von den gerade betätigten Schaltelementen jeweils nur ein Schaltelement geöffnet und ein weiteres Schaltelement geschlossen. Außerdem ist ein Rückwärtsgang schaltbar.

Die Ausbildung des Vorschalt-Planetenradsatzes als schaltbares Plus-Getriebe ermöglicht in vorteilhafter Weise eine gegenüber dem Stand der Technik der US 5,106,352 vergrößerte Spreizung, bei unverändert günstiger Gangabstufung.

Gemäß der Erfindung wird vorgeschlagen, den schaltbaren Vorschalt-Planetenradsatz über seine gekoppelten Stege mit der Getriebe-Eingangsdrehzahl anzutreiben und das Hohlrad des Vorschalt-Planetenradsatzes als Ausgangselement des Vorschalt-Planetentadsatzes mit den Eingangselementen der beiden Kupplungen, über welche die Ausgangsdrehzahlen des Vorschalt-Planetenradsatz auf den Haupt-Planetenradsatz übertragen werden können, zu verbinden. Das Sonnenrad des Vorschalt-Planetenradsatzes ist hierbei fest mit dem Getriebegehäuse verbunden.

Gemäß der Erfindung ist das Schaltelement, über welches das dritte Eingangselement des Haupt-Planetenradsatzes mit der Antriebswelle verbindbar und zwischen Vorschalt-Planetenradsatz und Haupt-Planetenradssatz angeordnet ist, in axialer Richtung unmittelbar angrenzend an den Vorschaft-Planetenradsatz. Dabei grenzt ein Eingangselement dieses Schaltelements unmittelbar axial an ein Stegblech der gekoppelten Stege des Vorschalt-Planetenradsatzes an, wobei dieses Stegblech auf einem Durchmesser oberhalb von Bolzen der inneren bzw. äußeren Planetenräder des Vorschalt-Planetenradsatzes gegen das Eingangselement des genannten Schaltelements abgedichtet ist, und wobei eine Schmiermittelzufuhr zu diesen inneren und äußeren Planetenrädern des Vorschaft-Planeteritadsatzes über einen axialen Spaltl zwischen Stegblech und Eingangselement des genannten Schaltelements erfolgt.

Vorzugsweise ist der Vorschatt-Planetenradsatzes dabei auf in radialer Richtung zumindest teilweise oberhalb eines Vorsprungs des Getriebegehäuses oder eines Vorsprungs einer Zwischenplatte, die fest mit dem Getriebegehäuse verbunden ist, angeordnet, wobei das Sonnenrad des Vorschalt-Planetenradsatzes an diesem Vorsprung befestigt ist. Diese räumliche Anordnung des Vorschalt-Planetenradsatzes, vorzugsweise im Getriebe-Innenraum an einer Außenseite des Getriebegehäuses, ermöglicht in Verbindung mit einer räumlichen Anordnung der beiden Schaltelemente, über welche die Ausgangsdrehzahl des Vorschalt-Planetenradsatzes auf die jeweils zugeordneten Eingangselemente des Haupt-Planetenradsatzes übertragbar wird, in unmittelbarer Nähe zum Vorschalt-Planetenradsatz eine konstruktiv einfache und bauraumsparende Verschachtelung der Bauteile.

In der bevorzugten Ausführungsform ist der Haupt-Planetenradsatz als Ravigneaux-Radsatz ausgebildet, eine bekanntlich sehr kompakte Bauform eines Zweisteg-Vierwellen-Planetengetriebes. Selbstverständlich kann der als Plus-Getriebe ausgebildete schaltbare Vorschalt-Planetenradsatz aber auch mit konstruktiv anderen Planetenradsatz-Anordnungen, die mindestens drei nicht miteinander gekoppelte Eingangs-Elemente aufweisen, kombiniert werden.

Im folgenden wird die Erfindung anhand der Zeichnungen Fig. 1 bis Fig. 3 näher erläutert.
Es zeigen:
- Fig. 1: ein beispielhaftes Getriebeschema (An- und Abtrieb koaxial);
- Fig. 2: ein Schaltschema des Getriebes gemäß Fig. 1 und
- Fig. 3: eine Detailkonstruktion der Bauteilanordnung gemäß Fig. 1.

In allen Figuren sind die Bezugszeichen vergleichbarer Bauelemente auch gleichartig bezeichnet.

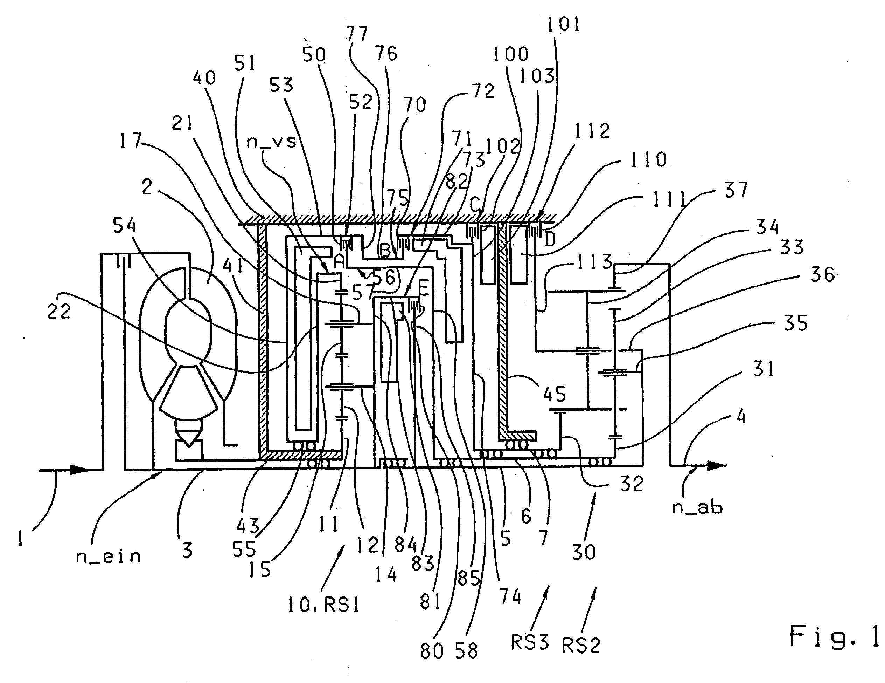

Fig. 1 zeigt nun ein beispielhaftes Getriebeschema einer erfindungsgemäßen Automatgetriebes. Mit 1 ist eine Motorwelle beispielsweise eines Verbrennungsmotors bezeichnet, über die das Automatgetriebe angetrieben wird. Zwischen der Motorwelle 1 und einer mit Getriebe-Eingangsdrehzahl n_ein rotierenden Antriebswelle 3 des Automatgetriebes ist ein üblicher Drehmomentwandler 2 vorgesehen. Selbstverständlich kann anstelle des Drehmomentwandlers 2 auch ein anderes Anfahrelement vorgesehen sein, beispielsweise eine separate Anfahrkupplung mit einem Zweimassen-Schwungrad als Drehmoment-Schwingungsdämpfer. Eine mit Getriebe-Abtriebsdrehzahl n_ab rotierende Abtriebswelle des Automatgetriebes ist mit 4 bezeichnet. Das Automatgetriebe umfaßt einen schaltbaren Vorschalt-Planetenradsatz 10, der erfindungsgemäß als Plus-Getriebe mit positiver Standgetriebe-Übersetzung ausgebildet ist, sowie einen schaltbaren Haupt-Planetenradsatz 30, der beispielsweise als Zweisteg-Vierwellen-Getriebe in Ravigneaux-Bauart ausgebildet ist. Es sind insgesamt fünf Schaltelement A bis E vorgesehen.

Der Vorschalt-Planetenradsatz 10, auch als RS1 bezeichnet, umfaßt ein Sonnenrad 11, innere und äußere Planetenräder 12 und 15, sowie ein Hohlrad 21. Ein Steg 14 der inneren Planetenräder 12 ist mit einem Steg 17 der äußeren Planetenräder 15 fest verbunden. Die Antriebswelle 3 ist mit diesen gekoppelten Stegen 14, 17 verbunden. Das Hohlrad 21 bildet das Ausgangselement des Vorschalt-Planetenradsatzes 10. Das Sonnenrad 11 ist mit einem zylinderförmigen Vorsprung 43 einer Getriebegehäusewand 41 fest verbunden. Die Getriebegehäusewand 41 wiederum ist mit einem Getriebegehäuse 40 fest verbunden. Getriebegehäuse 40 und Getriebegehäusewand 41 können einstückig ausgeführt sein. Der Vorsprung 43 der Getriebegehäusewand 41 kann auch als separate Nabe ausgeführt sein. Der Vorschalt-Planetenradsatz 10 ist also koaxial zumindest teilweise oberhalb des Vorsprungs 43 angeordnet. Im ausgeführten Beispiel bildet die Getriebegehäusewand 41 die Außenwand des Getriebegehäuses 40, die der Motorwelle 1 und damit dem nicht dargestellten Antriebsmotor zugewandt ist. Der Vorschalt-Planetenradsatz 10 ist also antriebsnah angeordnet, wobei die Anbindung der gekoppelten Stege 14, 17 an die Antriebswelle 3 räumlich gesehen auf der Seite des Vorschalt-Planetenradsatzes 10 erfolgt, die der Getriebegehäusewand 41 und damit dem Antriebsmotor abgewandt ist.

Der Haupt-Planetenradsatz 30 umfaßt zwei Radsätze RS2 und RS3. Dem Radsatz RS2 sind ein kleines Sonnenrad 31 und erste Planetenräder 33 zugeordnet. Dem Radsatz RS3 sind ein großes Sonnenrad 32 und zweite Planetenräder 34 zugeordnet. Mit 37 ist ein gemeinsames Hohlrad bezeichnet. Ein Steg 35 der ersten Planetenräder 33 und ein Steg 36 der zweiten Planetenräder 34 sind fest miteinander verbunden. Das Hohlrad 37 ist mit der Abtriebswelle 4 verbunden. Die gekoppelten Stege 35, 36 des Haupt-Planetenradsatzes 30 sind einerseits mit einer Stegwelle 5 verbunden und über diese Stegwelle 5 und das als Kupplung ausgebildete fünfte Schaltelement E mit der Antriebswelle 3 verbindbar. Andererseits sind die gekoppelten Stege 35, 36 mit einem Innenlamellenträger 113 des als Bremse ausgebildeten vierten Schaltelementes D verbunden und über diese Bremse D an dem Getriebegehäuse 40 festsetzbar. Das kleine Sonnenrad 31 des Haupt-Planetenradsatzes 30 ist mit einer ersten Sonnenwelle 6 verbunden und über diese erste Sonnenwelle 6 und das als Kupplung ausgebildete erste Schaltelement A mit dem Hohlrad 21 des Vorschalt-Planetenradsatzes 10 verbindbar. Das große Sonnenrad 32 des Haupt-Planetenradsatzes 30 ist einerseits mit einer zweiten Sonnenwelle 7 verbunden und über diese zweiten Sonnenwelle 7 und das als Kupplung ausgebildete zweite Schaltelement B mit dem Hohlrad 21 des Vorschalt-Planetenradsatzes 10 verbindbar. Andererseits ist das große Sonnenrad 32 mit einem Innenlamellenträger 103 des als Bremse ausgebildeten dritten Schaltelementes C verbunden und über diese Bremse C an dem Getriebegehäuse 40 festsetzbar.

Die in Fig. 1 dargestellte Ausbildung des Haupt-Planetenradsatzes 30 als Ravigneaux-Radsatz ist als beispielhaft anzusehen. Der Haupt-Planetenradsatz kann auch aus anderen Kombinationen einzelner Planetenradsätze gebildet sein. Wesentlich ist dabei nur, daß eine Ausgangsdrehzahl n_vs des Vorschalt-Planetenradsatzes 10 über zwei Schaltelemente (hier die Kupplungen A und B) auf zwei verschiedene, nicht fest miteinander verbundene Eingangselemente des Haupt-Planetenradsatzes übertragbar ist, und daß die Getriebe-Eingangsdrehzahl n_ein über ein weiteres Schaltelement (hier die Kupplung E) auf ein drittes freies Eingangselement des Haupt-Planetenradsatzes übertragbar ist. Die koaxiale Anordnung von Antrieb, Vorschalt-Planetenradsatz und Haupt-Planetenradsatz ist ebenfalls als beispielhaft anzusehen. Selbstverständlich kann das erfindungsgemäße Automatgetriebe auch einen Stirntrieb zwischen dem Ausgangselement des Haupt-Planetenradsatzes und der Abtriebswelle 4 aufweisen, und/oder oder eine winklige oder auch achs-parallele Anbindung zwischen Vorschalt- und Haupt-Planetenradsatz.

Alle fünf Schaltelemente A bis E sind räumlich auf der Seite des Haupt-Planetenradsatzes 30 angeordnet, die dem Vorschalt-Planetenradsatz 10 zugewandt ist. Die Kupplungen A, B und E, insbesondere deren Lamellen 50, 70 und 80, sind dabei in der Nähe des Vorschalt-Planetenradsatzes 10 angeordnet. Dabei grenzt die Kupplung E axial in Richtung Haupt-Planetenradsatz unmittelbar an den Vorschalt-Planetenradsatz 10 an. Die Lamellen 80 der Kupplung E sind dabei auf ähnlich großem Durchmesser angeordnet wie das Hohlrad 21 des Vorschalt-Planetenradsatzes 10. Die Lamellen 50 der Kupplung A sind zumindest überwiegend oberhalb des Hohlrades 21 des Vorschalt-Planetenradsatzes 10 angeordnet und die Lamellen 70 der Kupplung B zumindest teilweise oberhalb der Lamellen 80 der Kupplung E. Die Kupplung B ist also näher am Haupt-Planetenradsatz 30 angeordnet als die Kupplung A.

Das mit Eingangselement des fünften Schaltelementes E ist als Außenlamellenträger 82 ausgebildet, der auf der dem Haupt-Planetenradsatz 30 zugewandten Seite des Vorschalt-Planetenradsatzes 10 mit der Antriebswelle 3 wirkverbunden verbunden ist. Der Außenlamellenträger 82 weist die Form eines in Richtung Haupt-Planetenradsatz 30 geöffneten Zylinders auf, mit einem zylinderförmigen Abschnitt 83 und einem scheibenförmigen Abschnitt 84. Der Außendurchmesser des Außenlamellenträgers 82 ist dabei etwa groß oder etwas größer als der Außendurchmesser des Hohlrades 21 des Vorschalt-Planetenradsatzes 10. Der scheibenförmigen Abschnitt 84 des Außenlamellenträgers 82 grenzt axial unmittelbar an den Vorschalt-Planetenradsatz 10 an und ist mit dessen gekoppelten Stegen 14, 17 und mit der Antriebswelle 3 verbunden. Der zylinderförmige Abschnitt 83 des Außenlamellenträgers 82 schließt sich an diesen scheibenförmigen Abschnitt 84 an und erstreckt sich axial in Richtung Haupt-Planetenradsatz 30 bis zu den Lamellen 80 der Kupplung E.

Das Ausgangselement des fünften Schaltelementes E ist als zumindest weitgehend scheibenförmiger Innenlamellenträger 85 ausgebildet und erstreckt sich zentrisch bis zur Getriebemitte und ist dort mit der Stegwelle 5 verbunden. In günstiger Weise ist die Stegwelle 5 an der Antriebswelle 3 gelagert.

Eine Servo-Einrichtung 81 der Kupplung E ist beispielhaft innerhalb des zylinderförmigen Außenlamellenträgers 82 der Kupplung E angeordnet, axial angrenzend an den scheibenförmigen Abschnitt 84 des Außenlamellenträgers 82 und an den Innenlamellenträger 85 der Kupplung E, und betätigt die Lamellen 80 der Kupplung E von der dem Vorschalt-Planetenradsatz 10 zugewandeten Seite der Lamellen 80 aus in Richtung Haupt-Planetenradsatz 30. Dabei kann die Servo-Einrichtung 81 neben einer Betätigungseinrichtung für die Lamellen 80 auch eine Einrichtung zum Ausgleich des dynamischen Druckes eines rotierenden Kolbenraums der Kupplung E aufweisen. Aufgrund der vorgeschlagenen Anordnung rotiert die Servo-Einrichtung 81 der Kupplung E stets mit der Getriebe-Eingangsdrehzahl n_ein, wodurch in vorteilhafter Weise ein unerwünschtes Leerlaufen des Kolbenraums und - soweit vorhanden - auch des Druckausgleichsraums der Kupplung E im nichtgeschalteten Zustand der Kupplung E zuverlässig verhindert wird, insbesondere nach längerer Verweilzeit in nichtgeschaltetem Zustand. Hierdurch ergibt sich eine Verbesserung des Schaltkomforts beim Zuschalten der Kupplung E.

Das Eingangselement des ersten Schaltelementes A ist beispielhaft als Außenlamellenträger 52 ausgebildet, als in Richtung Haupt-Planetenradsatz 30 geöffneter Zylinder, mit einem zylinderförmigen Abschnitt 53 und einem scheibenförmigen Abschnitt 54 und eine Nabe 55. Der Außenlamellenträger 52 ist überwiegend auf der dem Haupt-Planetenradsatz 30 abgewandten Seite des Vorschalt-Planetenradsatzes 10 angeordnet und übergreift das Hohlrad 21 des Vorschalt-Planetenradsatzes 10 im Bereich der Lamellen 50 der Kupplung A. Die Nabe 55 des Außenlamellenträgers 52 ist auf dem zylindrischen Vorsprung 43 der Getriebegehäusewand 41, an dem das Sonnenrad 11 des Vorschalt-Planetenradsatzes 10 befestigt ist, gelagert, räumlich zwischen der Getriebegehäusewand 41 und dem Vorschalt-Planetenradsatz 10, also auf der dem Haupt-Planetenradsatz 30 abgewandten Seite des Vorschalt-Planetenradsatzes 10. Der scheibenförmige Abschnitt 54 des Außenlamellenträgers 52 ist mit der Nabe 55 verbunden und erstreckt sich - axial angrenzend an die Getriebegehäusewand 41 - radial in Richtung der Lamellen 50 der Kupplung A. An den scheibenförmigen Abschnitt 54 schließt sich auf großem Durchmesser der zylinderförmige Abschnitt 53 des Außenlamellenträgers 52 an und erstreckt sich axial in Richtung Haupt-Planetenradsatz 30 bis zu den Lamellen 50 der Kupplung A.

Die Nabe 55 des Außenlamellenträgers 52 der Kupplung A ist formschlüssig mit einem scheibenförmigen Hohlradträger 22 des Hohlrades 21 als Ausgangselement des Vorschalt-Planetenradsatzes 10 verbunden, wobei der Hohlradträger 22 unmittelbar auf des Seite des Vorschalt-Planetenradsatzes 10, die dem Haupt-Planetenradsatz 30 gegenüber liegt, an den Vorschalt-Planetenradsatz 10 angrenzt und sich vom Hohlrad 21 aus zentrisch in Richtung Antriebswelle 3 erstreckt bis zu der Nabe 55 des Außenlamellenträgers 52.

Das Ausgangselement der Kupplung A ist entsprechend als Innenlamellenträger 56 ausgebildet, als in Richtung Getriebegehäusewand 41 bzw. in Richtung Motorwelle 1 geöffneter Zylinder, mit einem zylinderförmigen Abschnitt 57 und einem scheibenförmigen Abschnitt 58. Dabei erstreckt sich der zylinderförmige Abschnitt 57 - in radialer Richtung oberhalb des Außenlamellenträgers 82 der Kupplung E - von den Lamellen 50 der Kupplung A axial in Richtung Haupt-Planetenradsatz 30 bis über den Außenlamellenträger 82 und die Lamellen 80 der Kupplung E hinweg. An diesen zylinderförmigen Abschnitt 57 schließt sich der scheibenförmige Abschnitt 58 des Innenlamellenträgers 56 an und erstreckt sich zentrisch in Richtung Getriebemitte, bis zu der ersten Sonnenwelle 6, die unmittelbar oberhalb der Stegwelle 5 verläuft, und ist mit dieser ersten Sonnenwelle 6 verbunden.

Da die Lamellen 50 der Kupplung A zumindest überwiegend oberhalb des Vorschalt-Planetenradsatzes 10 angeordnet sind und sich die Kupplung E axial in Richtung Haupt-Planetenradsatz 30 unmittelbar an der Vorschalt-Planetenradsatz 10 anschließt, übergreift das beispielhaft als Innenlamellenträger 56 ausgebildete Ausgangselement der Kupplung A die Kupplung E also vollständig.

Eine Servo-Einrichtung 51 des Kupplung A ist beispielhaft innerhalb des zylinderförmigen Außenlamellenträgers 52 der Kupplung A angeordnet, auf der Seite des Vorschalt-Planetenradsatzes 10, die dem Haupt-Planetenradsatz 30 gegenüber liegt. Dabei grenzt die Servo-Einrichtung 51 vorzugsweise unmittelbar an den scheibenförmigen Abschnitt 54 des Außenlamellenträgers 52 an und zumindest teilweise auch an den scheibenförmigen Hohlradträger 22 des Hohlrades 21. Die Servo-Einrichtung 51 betätigt die Lamellen 50 der Kupplung A in Richtung Haupt-Planetenradsatz 30. Je nach räumlicher Ausdehnung des Lamellenpaketes der Kupplung A in axialer Richtung relativ zum Hohlrad 21 kann dabei ein Betätigungselement der Servo-Einrichtung 51 auch zumindest teilweise über das Hohlrad 21 des Vorschalt-Planetenradsatzes 10 greifen. Neben der Betätigungseinrichtung für die Lamellen 50 kann die Servo-Einrichtung 51 - ähnlich wie schon zuvor am Beispiel der Servo-Einrichtung 81 der Kupplung E - auch einen dynamischen Druckausgleich für die rotierende Kupplung A aufweisen. In vorteilhafter Weise rotiert die Servo-Einrichtung 51 der Kupplung A stets mit der Ausgangsdrehzahl n_vs des Vorschalt-Planetenradsatzes 10, wodurch ein unerwünschtes Leerlaufen von Kolbenraum und ggf. auch Druckausgleichsraum vermieden wird, insbesondere bei längeren Verweilzeiten mit nichtgeschalteter Kupplung A.

Das Eingangselement des zweiten Schaltelementes B ist beispielhaft als Innenlamellenträger 75 ausgebildet, mit einem zylinderförmigen Abschnitt 76 und einem kurzen scheibenförmigen Abschnitt 77. Dabei ist der scheibenförmige Abschnitt 77 auf großem Durchmesser mit dem Außenlamellenträger 52 der Kupplung A verbunden, angrenzend an die Lamellen 50 der Kupplung A auf deren dem Haupt-Planetenradsatz 30 zugewandten Seite. An den scheibenförmigen Abschnitt 77 schließt sich der zylinderförmige Abschnitt 76 des Innenlamellenträgers 75 an und erstreckt sich - radial oberhalb des zylinderförmigen Abschnittes des Innenlamellenträgers 56 der Kupplung A - axial in Richtung Haupt-Planetenradsatz 30 bis zu den Lamellen 70 der Kupplung B. Die Lamellen 70 der Kupplung B, die sich axial in Richtung Haupt-Planetenradsatz 30 an die Lamellen 50 der Kupplung A anschließen, weisen vorzugsweise den gleichen Durchmesser auf wie die Lamellen 50 der Kupplung A, zumindest aber einen ähnlich großen Durchmesser. Neben dem fertigungstechnischen Vorteil gleicher Bauteile wird hierdurch auch eine möglichst geringe Lamellenanzahl beider drehmomentenmäßig gleich belasteten Kupplungen A, B erzielt.

Das Ausgangselement der Kupplung B ist beispielhaft als Außenlamellenträger 72 ausgebildet, als in Richtung Getriebegehäusewand 41 bzw. in Richtung Motorwelle 1 geöffneter Zylinder, mit einem zylinderförmigen Abschnitt 73 und einem scheibenförmigen Abschnitt 74. Dabei ersteckt sich der zylinderförmige Abschnitt 73 - in radialer Richtung oberhalb des zylinderförmigen Abschnitts 57 des Innenlamellenträgers 56 der Kupplung A - von den Lamellen 70 der Kupplung B axial in Richtung Haupt-Planetenradsatz 30 bis über den Innenlamellenträger 56 der Kupplung A hinweg bis in einen Bereich der Lamellen 100 der Bremse C. An diesen zylinderförmigen Abschnitt 73 schließt sich der scheibenförmige Abschnitt 74 des Außenlamellenträger 72 an und erstreckt sich zentrisch in Richtung Getriebemitte, bis zu der zweiten Sonnenwelle 7, die koaxial unmittelbar oberhalb der ersten Sonnenwelle 6 verläuft, und ist mit dieser zweiten Sonnenwelle 7 verbunden. Im Bereich seines größten Durchmessers ist der scheibenförmige Abschnitt 74 des Au-ßenlamellenträgers 72 mit dem Innenlamellenträger 103 der Bremse C verbunden. In einer vorteilhaften Ausgestaltung kann dieser Innenlamellenträger 103 der Bremse C in den Außenlamellenträger 72 der Kupplung B integriert sein, d. h. es kann eine einstückige Ausführung von Außenlamellneträger 72 und Innenlamellenträger 103 vorgesehen sein.

Da die Lamellen 70 der Kupplung B zumindest teilweise oberhalb der Lamellen 80 der Kupplung E angeordnet sind und der Innenlamellenträger 56 der Kupplung A die Kupplung E vollständig übergreift, durchgreift der Innenlamellenträger 56 als beispielhaftes Ausgangselement der Kupplung A den Kupplungsraum der Kupplung B, der insbesondere durch den Außenlamellenträger 72 der Kupplung B gebildet wird.

Eine Servo-Einrichtung 71 des Kupplung B ist beispielhaft innerhalb des zylinderförmigen Außenlamellenträgers 72 der Kupplung B angeordnet, vorzugsweise unmittelbar angrenzend an den scheibenförmigen Abschnitt 74 des Außenlamellenträgers 72 der Kupplung B und auch an den scheibenförmigen Abschnitt 58 des Innenlamellenträgers 56 der Kupplung A. Die Servo-Einrichtung 71 betätigt die Lamellen 70 der Kupplung B in Richtung Vorschalt-Planetenradsatz 30. Je nach räumlicher Ausdehnung des Lamellenpaketes der Kupplung B in axialer Richtung relativ zur Kupplung E bzw. relativ zum Innenlamellenträger 56 der Kupplung A, der die Kupplung E axial in Richtung Haupt-Planetenradsatz 30 radial umgreift, greift ein Betätigungselement der Servo-Einrichtung 71 auch teilweise über den zylindrischen Abschnitt 57 des Innenlamellenträgers 56 der Kupplung A hinüber. Neben der Betätigungseinrichtung für die Lamellen 70 kann die Servo-Einrichtung 71 selbstverständlich ebenfalls einen dynamischen Druckausgleich für die rotierende Kupplung B aufweisen. Dabei rotiert die Servo-Einrichtung 71 stets mit der Drehzahl des großen Sonnenrades 32 des Haupt-Planetenradsatzes 30.

Räumlich gesehen ist die Kupplung B also vollständig zwischen Vorschalt- und Haupt-Planetenradsatz 10, 30 angeordnet.

Die Anordnung der Kupplung E auf geringerem Durchmesser als die Kupplungen A und B ermöglicht eine baulängenoptimierte Ausführung aller drei Kupplungen A, B, E mit geringer Lamellenanzahl unter Berücksichtigung der kupplungsspezifischen Momentenbelastung. Bekanntlich muß die Kupplung E das über die Motorwelle 1 eingeleitete Antriebsmoment übertragen. Die Kupplungen A, B hingegen müssen das über den Vorschalt-Planetenradsatz 10 in den meisten Betriebszuständen verstärkte Antriebsmoment übertragen. Die Anordnung der Kupplung E auf geringerem Durchmesser als die Kupplungen A und B, radial unterhalb des scheibenförmigen Abschnitts 57 des Ausgangselementes der Kupplung A und radial unterhalb der Lamellen 70 der Kupplung B ermöglicht also in Verbindung mit der Anordnung der Lamellen 50 der Kupplung A radial oberhalb des Vorschalt-Planetenradsatzes 10 eine äußerst baulängensparende Ausführung der aus den drei Kupplungen A, B, E und dem Vorschalt-Planetenradsatz 10 bestehenden Baugruppe des Automatgetriebes.

Die Ausbildung des Eingangselementes der Kupplung A als Außenlamellenträger 52 und des Eingangselementes der Kupplung B als Innenlamellenträger 75 ermöglicht eine konstruktiv einfache Ausführung der drehmomentführenden Verbindungsstelle zwischen diesen beiden Eingangselementen, indem beispielsweise ein entsprechend ausgebildetes Element des Innenlamellenträgers 75 in eine Lamellen-Mitnahmeverzahnung des Außenlamellenträgers 52 eingehängt und im Außenlamellenträger 52 axial gesichert wird.

Wie in Fig. 1 ersichtlich, sind die Stegwelle 5 und die beiden Sonnenwellen 6, 7 koaxial übereinander angeordnet, im ausgeführten Beispiel auch koaxial zur Antriebswelle 3 und koaxial zur Abtriebswelle 4. Dabei ist die Stegwelle 5 mit den gekoppelten Stegen 35, 36 des Haupt-Planetenradsatzes 30 als dessen drittes Eingangselement verbunden, auf der dem Vorschalt-Planetenradsatz 10 abgewandten Seite des Haupt-Planetenradsatzes 30. Hierzu ist die Stegwelle 5 zentral durch den Haupt-Planetenradsatz 30 hindurch geführt. Die erste Sonnenwelle 6 ist koaxial oberhalb der Stegwelle 5 zentrisch innerhalb des Haupt-Planetenradsatzes 30 bis zu dessen kleinem Sonnenrad 31 geführt und mit diesem - als erstes Eingangselement des Haupt-Planetenradsatzes 30 - verbunden. Das große Sonnenrad 32 des Haupt-Planetenradsatzes 30 ist auf der dem Vorschalt-Planetenradsatz 10 zugewandten Seite des Haupt-Planetenradsatzes 30 angeordnet und - als zweites Eingangselement des Haupt-Planetenradsatzes 30 - mit der zweiten Sonnenwelle 7, die koaxial oberhalb der ersten Sonnenwelle 6 verläuft, verbunden.

Hinsichlich Lagerung der drei koaxial übereinander verlaufenden Wellen 5, 6, 7 und hinsichtlich Anordnung der Servo-Einrichtungen der beiden Bremsen C, D wird in Fig. 1 vorgeschlagen, zwischen den beiden Bremsen C, D eine Lagerplatte 45 vorzusehen, über welche die zweite Sonnenwelle 7 gelagert ist. In vorteilhafter Weise wird hierdurch sowohl eine gute Lagerung des Außenlamellenträgers 72 der Kupplung B erzielt, als auch eine gute Lagerung des großen Sonnenrades 32 des Haupt-Planetenradsatzes 30. Beide Servo-Einrichtungen 101, 111 der Bremsen C, D sind in einfacher Weise unmittelbar an dieser Lagerplatte 45 angeordnet, die Servo-Einrichtung 101 der Bremse C auf der dem Vorschalt-Planetenradsatz 10 zugewandten Seite der Lagerplatte 45, die Servo-Einrichtung 111 der Bremse D auf der dem Haupt-Planetenradsatz 30 zugewandten Seite der Lagerplatte 45. Auch können die Servo-Einrichtungen 101, 111 in der Lagerplatte 45 integriert sein. Die Außenlamellenträger 102, 112 der Bremsen C, D können in das Getriebegehäuse 30 integriert sein, als separate Bauelemente ausgeführt sein, oder auch in die Lagerplatte 45 integriert sein.

Durch diese in Fig. 1 beschriebene beispielhaften Anordnung aller Schaltelemente und Planetenradsätze wird in vorteilhafter Weise eine geringstmögliche Baulänge des gesamten Automatgetriebes mit koaxialem An- und Abtrieb erzielt.

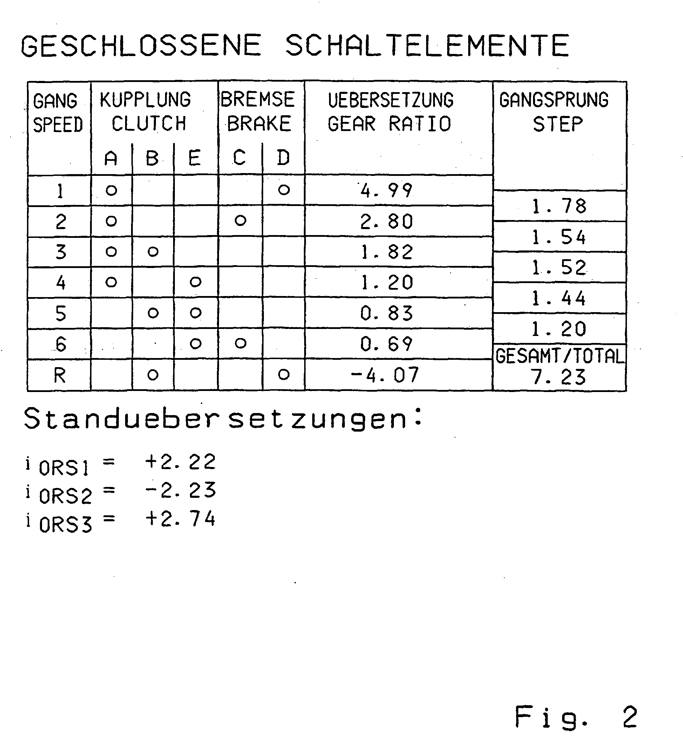

Eine Eingangsdrehzahl n_ein der Antriebswelle 3 wird durch selektives Schließen der Schaltelemente A bis E derart auf die mit einer Abtriebsdrehzahl n_ab rotierende Abtriebswelle 4 übertragen, daß sechs Vorwärtsgänge ohne Gruppenschaltung schaltbar sind, d.h. bei einer Umschaltung von einem Gang in den nächstfolgend höheren oder nächstfolgend niedrigeren Gang wird also von den gerade betätigten Schaltelementen jeweils nur ein Schaltelement geöffnet und ein weiteres Schaltelement geschlossen. In Fig. 2 ist eine Schaltlogik des erfindungsgemäßen Automatgetriebes gemäß Fig. 1 dargestellt, sowie die dazu gehörigen Übersetzungen, Gang-Stufungen und Gesamtspreizung. Ebenso dargestellt sind die Stand-Übersetzungen der einzelnen Radsätze RS1, RS2 und RS3. Gegenüber dem gattungsgemäßem Sechs-Gang-Automatgetriebe gemäß US 5,106,352 A ist die Spreizung in besonders vorteilhafter Weise deutlich vergrößert. Dabei ist die erzielte Gangabstufung harmonisch.

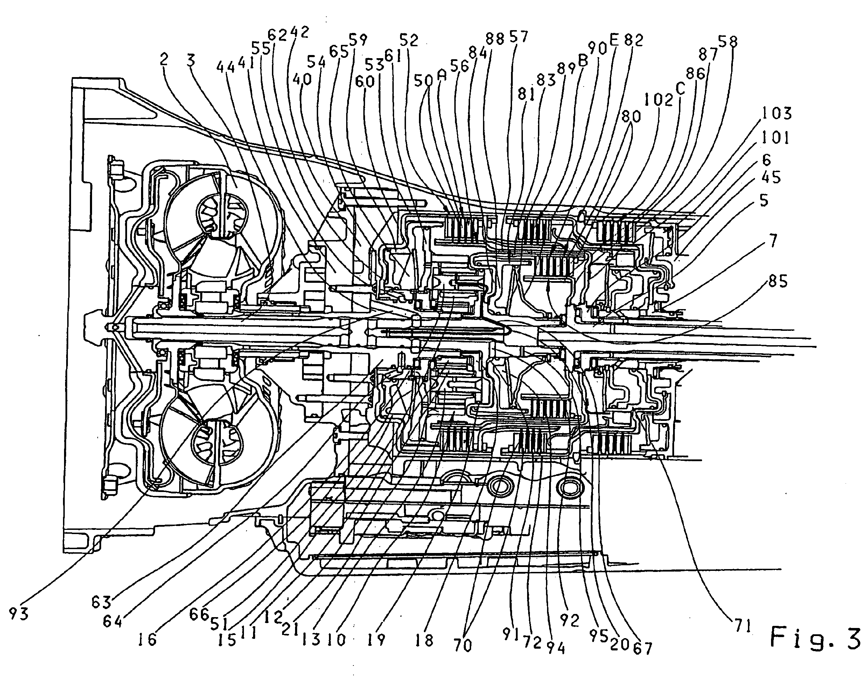

Fig. 3 zeigt eine Sektion eines Getriebeschnitts des beispielhaften Automatgetriebes gemäß Fig. 1 als ebenfalls beispielhafte Detailkonstruktion einer Baugruppe um den Vorschalt-Planetenradsatz herum, anhand der nun weitere Details der Erfindung erläutert werden.

Wie in Fig. 3 ersichtlich, entspricht die räumliche Anordnung des Vorschalt-Planetenradsatzes 10, des ersten, zweiten und fünften, jeweils als Kupplung ausgebildeten Schaltelementes A, B, E, sowie des dritten, als Bremse ausgebildeten Schaltelementes C innerhalb des Getriebegehäuses 40 und relativ zueinander der in Fig. 1 schematisch dargestellten Anordnung.

Das Getriebegehäuse 40 des Automatgetriebes weist eine Getriebegehäusewand 41 auf, welche eine Außenwand in Richtung eines beispielhaft als Drehmomentwandler 2 ausgebildeten Anfahrelementes des Getriebes bildet. Vom Innenraum des Getriebegehäuses 40 her ist eine Zwischenplatte 42 vorgesehen, die mit der Getriebegehäusewand 41 und dem Getriebegehäuse 40 verschraubt ist und insbesondere verschiedene - im einzelnen nicht näher dargestellte - Druckmittelkanäle ausweist. Mit dieser Zwischenplatte 42 wiederum ist eine Nabe 44 verschraubt. Die Nabe 44 weist insbesondere einen Druckzuführkanal 63 zu einem Kolbenraum 62 der Kupplung A, sowie einen Druckzuführkanal 93 zu einem Kolbenraum 91 der Kupplung E auf. Zumindest überwiegend oberhalb der Nabe 44 ist der Vorschalt-Planetenradsatz 10 angeordnet, wobei dessen Sonnenrad 11 an der Nabe 44 festgesetzt ist, vorzugsweise formschüssig über ein entsprechend ausgebildetes Mitnahmeprofil.

Der erfindungsgemäß als Plus-Getriebe ausgebildete Vorschalt-Planetenradsatz 10 umfaßt neben dem Sonnenrad 11 mindestens ein inneres Planetenrad 12, welches über einen Bolzen 13 an einem Stegblech 18 verdrehbar gelagert ist, mindestens ein äußeres Planetenrad 15, welches über einen Bolzen 16 ebenfalls an dem Stegblech 18 verdrehbar gelagert ist, sowie ein Hohlrad 21. Das Stegblech 18 erfüllt somit die Funktion der Koppelung der jeweiligen Stege der inneren und äußeren Planetenräder 12, 15 und ist als Eingangselement des Vorschalt-Planetenradsatzes 10 auf der zur Zwischenplatte 42 entgegengesetzten Seite des Vorschalt-Planetenradsates 10 mit einer Antriebswelle 3 des Automatgetriebes, welche die Nabe 44 und den Vorschalt-Planetenradsatz 10 zentral durchdringt, verbunden, vorzugsweise formschlüssig über ein entsprechend ausgebildetes Mitnahmeprofil. Das Hohlrad 21 bildet das Ausgangselement des Vorschalt-Planetenradsatzes 10.

Entsprechend dem Getriebeschema gemäß Fig. 1 ist das Hohlrad 21 des Vorschalt-Planetenradsatzes 10 mit einem Außenlamellenträger 52 der Kupplung A verbunden. Dabei ist der Außenlamellenträger 52 der Kupplung A als Zylinder ausgebildet, der in zur Zwischenplatte 42 bzw. zum Drehmomentwandler 2 entgegengesetzter Richtung geöffnet ist und unmittelbar an die Zwischenplatte 42 angrenzt. Analog zu Fig. 1 umfaßt der Außenlamellenträger 52 der Kupplung A dabei eine Nabe 55, einen zumindest weitgehend scheibenförmigen Abschnitt 54 und einen zylinderförmigen Abschnitt 53. Die Nabe 55 des Außenlamellenträgers 52 ist axial zwischen der Zwischenplatte 42 und dem Vorschalt-Planetenradsatz 10 oberhalb der mit der Zwischenplatte 42 verschraubten Nabe 44 angeordnet und radial auf dieser Nabe 44 gelagert. Der scheibenförmige Abschnitt 54 des Außenlamellenträgers 52 ist mit der Nabe 55 des Außenlamellenträgers 52 fest verbunden und erstreckt sich radial entlang der Zwischenplatte 42. Auf großem Durchmesser schließt sich der zylinderförmige Abschnitt 53 des Außenlamellenträgers 52 an den scheibenförmigen Abschnitt 54 an und erstreckt sich axial in zur Zwischenplatte 42 entgegengesetzter Richtung bis über die Lamellen 50 der Kupplung A, welche in radialer Richtung oberhalb des Hohlrades 21 des Vorschalt-Planetenradsatzes 10 angeordnet sind.

Eine Servo-Einrichtung 51 der Kupplung A ist innerhalb des Außenlamellenträgers 52 der Kupplung A angeordnet, axial angrenzend an den Vorschalt-Planetenradsatz 10, und betätigt die Lamellen 50 der Kupplung A in zur Zwischenplatte 42 bzw. in zum Drehmomentwandler 2 entgegengesetzter Richtung, also in Richtung des nicht dargestellten Haupt-Planetenradsatzes. Dabei umfaßt die Servo-Einrichtung 51 der Kupplung A einen Kolben 59, eine beispielhaft als Tellerfeder ausgebildete Rückstellfeder 60 des Kolbens 59, sowie eine Stauscheibe 61. Kolben 59 und Außenlamellenträger 52 bilden den Kolbenraum 62 der Kupplung A, der über einen Druckzuführkanal 64 der (rotierenden) Nabe 55 des Außenlamellenträgers 52 und den Druckzuführkanal 63 der mit der Zwischenplatte 42 verbundenen (gehäusefesten) Nabe 44 mit Druck beaufschlagbar ist. Auf der dem Kolbenraum 62 gegenüber liegenden Seite des Kolbens 59 sind Rückstellfeder 60 und Stauscheibe 61 angeordnet, derart, daß zwischen Kolben 59 und Stauscheibe 61 ein zum Kolben 59 hin druckdichter Druckausgleichsraum 65 gebildet wird. Hierdurch wird der dynamische Druck des rotierenden Kolbenraums 62 der Kupplung A vorzugsweise vollständig, zumindest aber teilweise ausgeglichen. Im dargestellten Beispiel erfolgt die Schmiermittelzufuhr zu dem Druckausgleichsraum 65 über eine zentrale Schmiermittelbohrung der Antriebswelle 3, über eine (schräge, beispielsweise auch radiale) Schmiermittelzuführbohrung 67 der Antriebswelle 3, über Spalte der Mitnahmeverzahnung zwischen Antriebswelle 3 und Stegblech 18, über Spalte der Mitnahmeverzahnung zwischen Nabe 44 der Zwischenplatte 42 und Sonnenrad 11, über Spalte der Lagerung der Nabe 55 des Außenlamellenträgers 52 auf der Nabe 44 der Zwischenplatte 42, sowie über einen Schmiermittelzuführkanal 66 der Nabe 55 des Außenlamellenträgers 52. Die Stauscheibe 61 ist im dargestellten Ausführungsbeispiel mit dem Hohlrad 21 des Vorschalt-Planetenradsatzes 10 verschweißt und übernimmt zusätzlich die Aufgabe der Drehmomentübertragung zwischen dem Hohlrad 21 und der Nabe 55 des Außenlamellenträgers 52 der Kupplung A. In einer anderen Ausgestaltung kann beispielsweise auch vorgesehen sein, daß die Stauscheibe 61 als separates Bauelement ausgebildet ist und das Hohlrad 21 formschlüssig, beispielsweise über einen Hohlradträger, mit der Nabe 55 des Außenlamellenträgers 52 der Kupplung A verbunden ist.

Auf der der Servo-Einrichtung 51 der Kupplung A bzw. auf der dem Drehmomentwandler 2 gegenüberliegenden Seite des Vorschalt-Planetenradsatzes 10 ist die Kupplung E angeordnet. Ein Außenlamellenträger 82 der Kupplung E bildet deren Eingangselement und ist mit der Antriebswelle 3 verbunden. Dabei ist der Außenlamellenträger 82 als Zylinder ausgebildet, der in zum Vorschalt-Planetenradsatz 10 bzw. Drehmomentwandler 2 entgegengesetzter Richtung geöffnet ist und unmittelbar an den Vorschalt-Planetenradsatz 10 angrenzt. Analog zu Fig. 1 umfaßt der Außenlamellenträger 82 der Kupplung E dabei einen zumindest weitgehend scheibenförmigen Abschnitt 84 und einen zylinderförmigen Abschnitt 83. Der scheibenförmige Abschnitt 84 des Außenlamellenträgers 82 ist mit der Antriebswelle 3 fest verbunden und erstreckt sich radial, unmittelbar angrenzend an das Stegblech 18, etwa bis zum Außendurchmesser des Hohlrades 21 des vorschalt-Planetenradsatzes 10. Hier schließt sich der zylinderförmige Abschnitt 83 des Außenlamellenträger 82 an den scheibenförmigen Abschnitt 84 an und erstreckt sich axial in Richtung des nicht dargestellten Haupt-Planetenradsatzes bis über die Lamellen 80 der Kupplung E.

Da zwischen dem Stegblech 18 des Vorschalt-Planetenradsatzes 10 und dem beispielhaft als Außenlamellenträger 82 ausgebildeten Eingangselement der Kupplung E konzeptbedingt keine Relativdrehzahl vorliegt, ist in besonders vorteilhafter Weise zwischen Stegblech 18 und Außenlamellenträger 82 auf einem Durchmesser oberhalb der Bolzen 13, 16 der inneren bzw. äußeren Planetenräder 12, 15 des Vorschalt-Planetenradsatzes 10 ein Abdichtelement 19 vorgesehen. Dieses Abdichtelement 19 kann in einfacher Weise als O-Ring ausgeführt sein, jedoch eignen sich prinzipbedingt auch alle anderen bekannten statischen Abdicht-Systeme wie beispielsweise Lippendichtringe, Rechteckringe, Flachdichtungen oder schmiermitteldichte Verklebung. Die Schmiermittelzufuhr zu den Lagern der Planetenräder 12, 15 des Vorschalt-Planetenradsatzes 10 ist in Fig. 3 mit 20 bezeichnet und erfolgt über die zentrale Schmiermittelbohrung der Antriebswelle 3, die Schmiermittelbohrung 67 der Antriebswelle 3, über die auch der Druckausgleichsraum 65 der Kupplung A mit Schmiermittel versorgt wird, über einen sich radial erstreckenden Spalt zwischen Stegblech 18 und dem scheibenförmigen Abschnitt 84 des Außenlamellenträgers 82 der Kupplung E, sowie über zentrale und radiale Schmiermittelbohrungen der Bolzen 13, 16 der Planetenräder 12, 15. Auf diese Weise wird eine optimale Schmiermittelversorgung der rotierenden Planetenräder 12, 15 erreicht, ohne daß ein aufwendiges zusätzliches Bauteil, beispielsweise ein an dem Stegblech 18 befestigtes Schmiermittel-Fangblech, erforderlich ist.

Zur Sicherstellung einer gleichmäßigen SchmiermittelVersorgung aller Planetenräder 12, 15 des Vorschalt-Planetenradsatzes 10 kann vorgesehen sein, daß die Durchmesser der Schmiermittel-Bohrungen der Bolzen 13, 16 der inneren und äußeren Planetenräder 12, 15 aufeinander, derart abgestimmt sind, daß der Schmiermittel-Ablauf der "inneren" Bolzen 13, die im Vergleich zu den "äußeren" Bolzen 16 einen kleineren Teilkreisdurchmesser aufweisen, zumindest annährend dem Schmiermittel-Ablauf der "äußeren" Bolzen 16 entspricht. Beispielsweise kann hierzu die zentrale Schmiermittel-Bohrung der "äußeren" Bolzen 16 einen geringfügig kleineren Durchmesser aufweisen als die zentrale Schmiermittel-Bohrung der "inneren" Bolzen 13.

Eine Servo-Einrichtung 81 der Kupplung E ist innerhalb des Außenlamellenträgers 82 der Kupplung E angeordnet, benachbart zum Vorschalt-Planetenradsatz 10, und betätigt die Lamellen 80 der Kupplung E in zum Vorschalt-Planetenradsatz 10 entgegengesetzter Richtung, also in Richtung des nicht dargestellten Haupt-Planetenradsatzes. Ähnlich wie die Servo-Einrichtung 51 der Kupplung A weist auch die Servo-Einrichtung 81 der Kupplung E neben einer Betätigungseinrichtung für die Lamellen 80 einen dynamischen Druckausgleich auf. Dabei umfaßt die Servo-Einrichtung 81 einen Kolben 88, eine beispielhaft als Tellerfeder ausgebildete Rückstellfeder 89 des Kolbens 88, sowie eine Stauscheibe 90. Kolben 88 und Außenlamellenträger 82 bilden den Kolbenraum 91 der Kupplung E, der über eine Druckzuführbohrung 92 der Antriebswelle 3 mit Druck beaufschlagbar ist. Auf der dem Kolbenraum 91 gegenüber liegenden Seite des Kolbens 88 sind Rückstellfeder 89 und Stauscheibe 90 angeordnet, derart, daß zwischen Kolben 88 und Stauscheibe 90 ein zum Kolben 88 hin druckdichter Druckausgleichsraum 94 gebildet wird. Hierdurch wird der dynamische Druck des rotierenden Kolbenraums 91 der Kupplung E vorzugsweise vollständig, zumindest aber teilweise ausgeglichen. Im dargestellten Beispiel erfolgt die Schmiermittelzufuhr zu dem Druckausgleichsraum 94 über die zentrale Schmiermittelbohrung der Antriebswelle 3 und über eine radiale Schmiermittelzuführbohrung 95 der Antriebswelle 3.

Ein Innenlamellenträger 85 der Kupplung E als deren Ausgangselement umfaßt einen zylinderförmigen Abschnitt 86, der sich in axialer Richtung radial unterhalb der Lamellen 80 der Kupplung E erstreckt, sowie einen scheibenförmigen Abschnitt 87, der mit einer zentral angeordneten Stegwelle 5 fest verbunden ist. Die Anbindung der Stegwelle 5 an den Haupt-Planetenradsatz ist nicht weiter dargestellt.

Ein Innenlamellenträger 56 der Kupplung A als deren Ausgangselement umfaßt einen zylinderförmigen Abschnitt 57, sowie einen scheibenförmigen Abschnitt 58. Dabei erstreckt sich der zylinderförmige Abschnitt 57 radial unterhalb der Lamellen 50 der Kupplung A in axialer Richtung von den Lamellen 50 der Kupplung A bis über die Lamellen 80 der Kupplung E. Auf der Seite der Lamellen 80 der Kupplung E, die dem Vorschalt-Planetenradsatz 10 abgewandt ist, schließt sich der scheibenförmige Abschnitt 58 des Innenlamellenträgers 56 an den zylinderförmigen Abschnitt 57 an und erstreckt sich zentrisch in Richtung Stegwelle 5, bis zu einer koaxial oberhalb der Stegwelle 5 verlaufenden ersten Sonnnenwelle 6, mit der er fest verbunden ist. Die Anbindung der ersten Sonnnenwelle 6 an den Haupt-Planetenradsatz ist nicht weiter dargestellt. Das Ausgangselement der Kupplung A übergreift die Kupplung E also vollständig.

Außer den Hinweisen, daß eine Servo-Einrichtungen 71 der Kupplung B neben einer Betätigungseinrichtung für die Lamellen 70 der Kupplung B auch einen dynamischen Druckausgleich aufweist, daß Außenlamellenträger 72 der Kupplung B und Innenlamellenträger 103 der Bremse C als vorteilhafte Konstruktion einstückig ausgeführt sind, und daß ein Außenlamellenträger 102 der Bremse C und eine Servo-Einrichtung 101 der Bremse C als montagefreundliche Konstruktion in eine Lagerplatte 45, die in das Getriebegehäuse 40 verdrehfest und axial gesichert eingesetzt ist, integriert ist, wird auf eine weitere detaillierte Beschreibung der Ausgestaltung und Anordnung der einzelnen Bauelemente von Kupplung B und Bremse C wegen deren weitgehender Übereinstimmung mit Fig. 1 verzichtet.

Wie in Fig. 3 ersichtlich, handelt es sich also um eine äußerst kompakte und bauraumsparende Anordnung einer Baugruppe aus dem Vorschalt-Planetenradsatz 10 und dem ersten, zweiten und fünften Schaltelement A, B, E, mit optimaler Schmiermittelversorgung der rotatorisch hoch belasteten Planetenräder 12, 15 des Vorschalt-Planetenradsatzes 10.

Wie bereits erwähnt, sind die in Fig. 1 und Fig. 3 dargestellten konstruktiven Ausgestaltungen und Anordnungen der einzelnen Bauelemente der fünf Schaltelemente A bis E, des Vorschalt-Planetenradsatzes 10 und des Haupt-Planetenradsatzes 30 als beispielhaft zu verstehen. Hinsichtlich weiterer günstiger Anordnungen der Bauelemente des Automatgetriebes und hinsichtlich weiterer günstiger bauteilseitiger Ausgestaltungen wird auf die zeitgleiche Patentanmeldung mit internem Aktenzeichen "8267 S" der Anmelderin hingewiesen.

In dieser zeitgleichen Patentanmeldung mit internem Aktenzeichen "8267 S" der Anmelderin wird ein hinsichtlich des Radsatzkonzeptes vergleichbares Mehrstufengetriebe offenbart, mit einem als Plus-Getriebe ausgebildeten Vorschalt-Planetenradsatz und einem vorzugsweise als Ravigneaux-Radsatz ausgebildeten mehrgliedrigen Haupt-Planetenradsatz, wobei mit insgesamt sechs Schaltelementen mindestens sechs Vorwärtsgänge ohne Gruppenschaltung schaltbar sind. Wie bei der vorliegenden Erfindung ist hier die Ausgangsdrehzahl des Vorschalt-Planetenradsatzes über ein erstes und ein zweites Schaltelement auf zwei nicht miteinander verbundene Eingangselemente des Haupt-Planetenradsatzes sowie die Eingangsdrehzahl des Getriebes über ein fünftes Schaltelement auf ein drittes freies Eingangselemenet des Haupt-Planetenradsatzes übertragbar. Gegenüber der vorliegenden Erfindung ist hier der Vorschalt-Planetenradsatz stets über das sechste Schaltelement des Getriebes schaltbar. Hinsichtlich konstruktiver Ausgestaltung der einzelnen Bauelemente des Getriebes und deren Anordung innerhalb des Getriebegehäuses relativ zueinander sind zahlreiche Varianten offenbart, insbesondere verschiedene Anordnungen der Schaltelemente und deren Servo-Einrichtungen relativ zueinander und relativ zu den Planetenradsatz-Elementen, sowie verschiedene Anordnungen einer Stirnradstufe relativ zu den Schaltelementen und Planetenradsätzen.

Die vorliegende Erfindung geht von der Verwendung von nur fünf Schaltelementen aus. Der Fachmann kann in sinnvoller Weise das vorliegende Radsatzkonzept mit fünf Schaltelementen mit den verschiedenen konstruktiven Ausgestaltungen und Anordnungen der einzelnen Bauteile kombinieren, die in der oben genannten zeitgleichen Patentanmeldung mit internem Aktenzeichen "8267 S" der Anmelderin offenbart sind, wobei dann stets das sechste Schaltelement, über das der Vorschalt-Planetenradsatz schaltbar ist, entfällt. Für alle diese möglichen Kombinationen wird im Rahmen der vorliegenden Anmeldung gesondert Schutz begehrt.

### Bezugszeichen

- A, B, C, D, E: Schaltelemente
- n_ein: Getriebe-Eingangsdrehzahl
- n_vs: Ausgangsdrehzahl des Vorschalt-Planetenradsatzes
- n_ab: Getriebe-Abtriebsdrehzahl

- 1: Motorwelle
- 2: Drehmomentwandler
- 3: Antriebswelle
- 4: Abtriebswelle
- 5: Stegwelle
- 6: erste Sonnenwelle
- 7: zweite Sonnenwelle

- 10: Vorschalt-Planetenradsatz RS1
- 11: Sonnenrad des Vorschalt-Planetenradsatzes
- 12: inneres Planetenrad des Vorschalt-Planetenradsatzes
- 13: Bolzen des inneren Planetenrades des Vorschalt-Planetenradsatzes
- 14: Steg der inneren Planetenräder des Vorschalt-Planetenradsatzes
- 15: äußeres Planetenrad des Vorschalt-Planetenradsatzes
- 16: Bolzen des äußeren Planetenrades des vorschalt-Planetenradsatzes
- 17: Steg der äußeren Planetenräder des Vorschalt-Planetenradsatzes
- 18: Stegblech der gekoppelten Stege der inneren und äußeren Planetenräder des Vorschalt-Planetenradsatzes
- 19: Abdichtelement des Stegblechs
- 20: Schmierölzufuhr zu den Planentenrädern des Vorschalt-Planetenradsatzes
- 21: Hohlrad des Vorschalt-Planetenradsatzes
- 22: Hohlradträger des Hohlrades des Vorschalt-Planetenradsatzes

- 30: Haupt-Planetenradsatz, bestehend aus RS2 und RS3
- 31: kleines Sonnenrad des Haupt-Planetenradsatzes
- 32: großes Sonnenrad des Haupt-Planetenradsatzes
- 33: erstes Planetenrad des Haupt-Planetenradsatzes
- 34: zweites Planetenrad des Haupt-Planetenradsatzes
- 35: Steg des ersten Planetenrades des Haupt-Planetenradsatzes
- 36: Steg des zweiten Planetenrades des Haupt-Planetenradsatzes.
- 37: Hohlrad des Haupt-Planetenradsatzes

- 40: Getriebegehäuse
- 41: Getriebegehäusewand
- 42: Zwischenplatte
- 43: zylindrischer Vorsprung der Getriebegehäusewand bzw. der Zwischenplatte
- 44: Nabe der Zwischenplatte
- 45: Lagerplatte

- 50: Lamellen der Kupplung A
- 51: Servo-Einrichtung der Kupplung A
- 52: Außenlamellenträger der Kupplung A
- 53: zylinderförmiger Abschnitt des Außenlainellenträgers der Kupplung A
- 54: scheibenförmiger Abschnitt des Außenlamellenträgers der Kupplung A
- 55: Nabe des Außenlamellenträgers der Kupplung A
- 56: Innenlamellenträger der Kupplung A
- 57: zylinderförmiger Abschnitt des Innenlamellenträgers der Kupplung A
- 58: scheibenförmiger Abschnitt des Innenlamellenträgers der Kupplung A
- 59: Kolben der Kupplung A
- 60: Rückstellfeder des Kolbens der Kupplung A
- 61: Stauscheibe der Kupplung A
- 62: Kolbenraum der Kupplung A
- 63: Druckzuführkanal der Nabe der Zwischenplatte zum Kolbenraum der Kupplung A
- 64: Druckzuführkanal der Nabe des Außenlamellenträgers der Kupplung A
- 65: Druckausgleichsraum der Kupplung A
- 66: Schmiermittelzuführkanal der Nabe des Außenlamellenträgers der Kupplung A zum Druckausgleichsraum der Kupplung A
- 67: Schmiermittelzuführbohrung der Antriebswelle zum Druckausgleichsraum der Kupplung A und zu den Planetenrädern des Vorschalt-Planetenradsatzes

- 70: Lamellen der Kupplung B
- 71: Servo-Einrichtung der Kupplung B
- 72: Außenlamellenträger der Kupplung B
- 73: zylinderförmiger Abschnitt des Außenlamellenträgers der Kupplung B
- 74: scheibenförmiger Abschnitt des Außenlamellenträgers der Kupplung B
- 75: Innenlamellenträger der Kupplung B
- 76: zylinderförmiger Abschnitt des Innenlamellenträgers der Kupplung B
- 77: scheibenförmiger Abschnitt des Innenlamellenträgers der Kupplung B

- 80: Lamellen der Kupplung E
- 81: Servo-Einrichtung der Kupplung E
- 82: Außenlamellenträger der Kupplung E
- 83: zylinderförmiger Abschnitt des Außenlamellenträgers der Kupplung E
- 84: scheibenförmiger Abschnitt des Außenlamellenträgers der Kupplung E
- 85: Innenlamellenträger der Kupplung E
- 86: zylinderförmiger Abschnitt des Innenlamellenträgers der Kupplung E
- 87: scheibenförmiger Abschnitt des Innenlamellenträgers der Kupplung E
- 88: Kolben der Kupplung E
- 89: Rückstellfeder des Kolbens der Kupplung E
- 90: Stauscheibe der Kupplung E
- 91: Kolbenraum der Kupplung E
- 92: Druckzuführbohrung der Antriebswelle zum Kolbenraum der Kupplung E
- 93: Druckzuführkanal der Nabe der Zwischenplatte zum Kolbenraum der Kupplung E
- 94: Druckausgleichsraum der Kupplung E
- 95: Schmiermittelzuführbohrung der Antriebswelle zum Druckausgleichsraum der Kupplung E

- 100: Lamellen der Bremse C
- 101: Servo-Einrichtung der Bremse C
- 102: Außenlamellenträger der Bremse C
- 103: Innenlamellenträger der Bremse C

- 110: Lamellen der Bremse D
- 111: Servo-Einrichtung der Bremse D
- 112: Außenlamellenträger der Bremse D
- 113: Innenlamellenträger der Bremse D

## Patentansprüche

1. Mehrstufengetriebe, mit einer Antriebswelle (3), die mit einem Vorschalt-Planetenradsatz (10) verbunden ist, mit einer Abtriebswelle(4), die mit einem Haupt-Planetenradsatz (30) verbunden ist, mit mehreren Schaltelementen (A bis E), durch deren selektives Schließen sechs Vorwärtsgänge schaltbar sind und eine Getriebe-Eingangsdrehzahl (n_ein) der Antriebswelle (3) derart auf die Abtriebswelle (4) übertragbar ist, dass zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird, wobei
- der Haupt-Planetenradsatz (30) drei nicht gekoppelte Eingangselemente aufweist, ein Ausgangselement des Vorschalt-Planotenradsatzes (10) über ein erstes Schaltelement (A) mit dem ersten Eingangselement des Haupt-Ptanetenradsatzes (30) und über ein zweites Schaltelement (B) mit dem zweiten Eingangselement des Haupt-Planetenradsatzes (30) verbindbar ist, die Antriebswelle (3) über ein fünftes Schaltelement (E) mit dem dritten Eingartgselement des Haupt-Planetenradsatzes (30) verbindbar ist und ein Element des Vorschalt-Planetenradsatzes (10) festgesetzt ist;
- der Vorschalt-Planetenradsatz (10) als Plus-Getriebe ausgebildet ist mit inneren und äußeren Planetenrädern (12, 15), deren Stege (14, 17) miteinander verbunden sind;
- die gekoppelten Stege (14,17) des Vorschatt Planetenradsatzes (10) mit der Antriebswelle (3) verbunden sind;
- ein Hohlrad (21) des Vorschalt-Planetenradsatzes (10) mit dem ersten und zweiten Eingangsetement des Haupt-Planetenradsatzes (30) verbindbar ist und
- dass ein Sonnenrad (11) des Vorschalt-Planetenradsatzes (10) an einem Getriebegehäuse (40) festgesetzt ist,
**dadurch gekennzeichnet, dass**
- das fünfte Schaltelement (E) zwischen Vorschalt-Planetenradatz (10) und Haupt-Planetenradsatz (30) angeordnet ist, in axialer Richtung unmittelbar angrenzend an den Vorschalt-Planetenradsatz (10);
- die Stege (14, 17) der inneren und äußeren Planetenräder (12, 15) des Vorschalt-Planetenradsatzes (10) über ein Stegblech (18) miteinander verbunden sind;
- ein Eingangselement des fünften Schaltelements (E) unmittelbar axial an das Stegblech (18) angrenzt,;
- das Stegblech (18) auf einem Durchmesser oberhalb von Bolzen (13, 16) der inneren bzw. äußeren Planetenräder (12, 15) des Vorschalt-Planetenradsatzes (10) gegen das Eingangselemerit des fünften Schaltelements (E) abgedichtet ist und
- eine Schmiermittelzufuhr (20) zu den inneren und äußeren Planetenrädem (12, 15) des Vorschalt-Planetenradsatzes (10) über einen axialen Spalt zwischen Stegblech (18) und Eingangselement des fünften Schattelements (E) erfolgt.

2. Mehrstufengetriebe nach Anspruch 1 **dadurch gekennzeichnet, dass** der Vorschalt-Planetenradsatz (10) nahe einer Getriebegehäusewand (41) des Getriebegehäuses (40) angeordnet ist, in radialer Richtung zumindest teilweise oberhalb eines Vorsprungs (43) der Getriebegehäusewand (31) oder einer fest mit der Getriebegehäusewand (41) verbunden Nabe (44), wobei die Getriebegehäusewand (41) als Teil eines Getriebegehäuses (40) oder als eine mit dem Getriebegehäuse (40) fest verbundenen Zwischenplatte (42) ausgebildet ist, und wobei das Sonnenrad (11) des Vorschalt-Planetenradsatzes (10) mit dem Vorsprung (43) bzw. der Nabe (44) wirkverbunden ist.

3. Mehrstufengetriebe nach Anspruch 2, **dadurch gekennzeichnet, dass** die Getriebegehäusewand (41) an der Seite des Getriebegehäuses (40) angeordnet ist, die einer mit der Antriebswelle (3) wirkverbundenen Motorwelle (1) eines Antriebsmotors des Mehrstufengetriebes zugewandt ist.

4. Mehrstufengetnebe nach Anspruch 2, **dadurch gekennzeichnet, dass** die Getriebegehäusewand an der Seite des Getriebegehäuses angeordnet ist, die einer mit der Antriebswelle wirkverbundenen Motorwelle eines Antriebsmotors des Mehrstufengetriebes gegenüber liegt.

5. Mehrstufengetriebe nach einem der Ansprüche 1 bis 4, **dadurch gekennzeichnet, dass** der Vorschalt-Planetenradsatz (10) und das erste, zweite und fünfte Schalteternent (A, B, E) zusammen angeordnet sind, auf einer Seite des Haupt-Ptanetenradsatzes (30).

6. Mehrstufengetriebe nach einem der Ansprüche 1 bis 5, **dadurch gekennzeichnet, dass** das erste und zweite Schaltelement (A, B), insbesondere deren Lamellen (50, 70), axial nebeneinander angeordnet sind.

7. Mehrstufengetriebe nach einem der Ansprüche 1 bis 6, **dadurch gekennzeichnet, dass** das zweite Schaltelement (B) näher am Haupt-Planetenradsatz (30) angeordnet ist als das erste Schaltelement (A), insbesondere dass Lamellen (70) des zweiten Schaltelementes (B) näher am Haupt-Planetenradsatz (30) angeordnet sind als Lamellen (50) des ersten Schaltelementes (A).

8. Mehrstufengetriebe nach einem der Ansprüche 1 bis 7, **dadurch gekennzeichnet, dass** das erste Schaltelement (A) unmittelbar benachbart zum Vorschalt-Planetenradsatz (10) angeordnet ist, insbesondere dass die Lamellen (50) des ersten Schaltelementes (A) und/oder eine Servo-Einrichtung (51) des ersten Schaltelementes (A) unmittelbar benachbart zum Vorschalt Planetenradsatz (10) angeordnet sind.

9. Mehrstufengetriebe nach einem der Ansprüche 1 bis 8, **dadurch gekennzeichnet, dass** die Lamellen (50) des ersten Schaltelementes (A) zumindest teilweise radial oberhalb des Vorschalt-Planetenradsatzes (10) und/oder zumindest teilweise radial oberhalb von Lamellen (80) des fünften Schaltelementes (E) angeordnet sind.

10. Mehrstufengetriebe nach einem der Ansprüche 1 bis 9, **dadurch gekennzeichnet, dass** das zweite Schaltelement (B) zwischen dem ersten Schaltelement (A) und dem Haupt-Planetenradsatz (30) angeordnet ist.

11. Mehrstufengetriebe nach einem der Ansprüche 1 bis 10, **dadurch gekennzeichnet, dass** die Lamellen (70) des zweiten Schaltelementes (B) axial in Richtung Haupt-Planetenradsatz (30) an die Lamellen (50) des ersten Schaltelementes (A) angrenzen.

12. Mehrstufengetriebe nach einem der Ansprüche 1 bis 11, **dadurch gekennzeichnet, dass** die Lamellen (70) des zweiten Schaltelementes (B) zumindest teilweise radial oberhalb des fünften Schaltelementes (E) angeordnet sind.

13. Mehrstufengetriebe nach einem der Ansprüche 1 bis 12, **dadurch gekennzeichnet, dass** die Servo-Einrichtung (51) des ersten Schaltelementes (A) zumindest teilweise auf der dem Haupt-Planetenradsatz (30) abgewandten Seite des Vorschalt-Planetenradsatzes (10) angeordnet ist, insbesondere radial oberhalb des Vorsprungs (43) der Getriebegehäusewand (41) bzw. radial oberhalb des mit der Getriebegehäusewand (41) verbunden Nabe (44), angrenzend an den Vorschalt-Planotenradsatz (10).

14. Mehrstufengetriebe nach einem der Ansprüche 1 bis 13, **dadurch gekennzeichnet, dass** ein Eingangselement des ersten Schaltelementes (A) auf dem Vorsprung (43) der Getriebegehäusewand (41) bzw. auf der mit der Getriebegehäusewand (41) verbunden Nabe (44) gelagert ist.

15. Mehrstufengetriebe nach einem der Ansprüche 1 bis 14, **dadurch gekennzeichnet, dass** ein Ausgangselement des ersten Schaltelementes (A) das fünfte Schaltelement (E) in axialer Richtung radial übergreift.

16. Mehrstufengetriebe nach einem der Ansprüche 1 bis 15, **dadurch gekennzeichnet, dass** das Ausgangselement des ersten Schaltelementes (A) einen Kupptungsraum des zweiten Schaltelementes (B) durchgreift

17. Mehrstufengetriebe nach einem der Ansprüche 1 bis 16, **dadurch gekennzeichnet, dass** die Servo-Einrichtung (51) des ersten Schaltelementes (A) auf der dem Haupt-Plänetenradsatz (30) abgewandten Seite der Lamellen (50) des ersten Schaltelementes (A) angeordnet ist, insbesondere dass die Servo-Einrichtung (51) des ersten Schaltelementes (A) die Lamellen (50) des ersten Schaltelementes (A) von deren dem Haupt-Planetenradsatz (30) abgewandten Seite her betätigt.

18. Mehrstufengetriebe nach einem der Ansprüche 1 bis 17, **dadurch gekennzeichnet, dass** die Servo-Einrichtung (71) des zweiten Schaltelementes (B) auf der dem Haupt-Planetenradsalz (30) zugewandten Seite der Lamellen (70) des zweiten Schaltelementes (B) angeordnet ist, insbesondere dass die Servo-Einrichtung (71) des zweiten Schaltelementes (B) die lamellen (70) des zweiten Schaltelementes (A) von deren dem Haupt-Planetenradsatz (30) zugewandten Seite her betätigt.

19. Mehrstufengetriebe nach einem der Ansprüche 1 bis 18, **dadurch gekennzeichnet, dass** das dritte Eingangselement des Haupt-Planetenradsatzes (30) über eine Stegwelle (5) mit einem Ausgangselement des fünften Schaltelementes (E) verbunden ist, dass das erste Eingangselement des Haupt-Planetenradsatzes (30) über eine erste Sonnenwelle (6) mit einem Ausgangselement des ersten Schaltelementes (A) verbunden ist, und dass das zweite Eingangselement des Haupt-Planetenradsatzes (30) über eine zweite Sonnenwelle (7) mit einem Ausgangselement des zweiten Schaltelementes (B) verbunden ist, wobei die Stegwelle (5) zentrisch durch den Haupt-Planetenradsatz (30) hindurch geführt ist, und wobei die erste Sonnenwelle (6) zwischen Vorschalt- und Haupt-Planetenradsatz (10, 30) radial oberhalb der Stegwelle (5) verläuft und/oder auf dieser gelagert ist, und wobei die zweite Sonnenwelle (7) zwischen Vorschaft- und Haupt-Planetenradsatz (10, 30) radial ober halb der ersten Sonnenwelle (6) verläuft und/oder auf dieser gelagert ist.

20. Mehrstufengetriebe nach einem der Ansprüche 1 bis 19, **dadurch gekennzeichnet, dass** der Haupt-Planetenradsatz (30) als Ravigneaux-Planetenradsatz ausgebildet ist, mit einem kleinen Sonnenrad (31) als erstes Eingangselement, mit einem großen Sonnenrad (32) als zweites Eingangselement, mit gekoppelten Stegen (35, 36) als drittes Eingangselement, sowie mit einem Hohlrad (37) als Ausgangselement des Haupt-Planetenradsatzes (30).

## Claims

1. The invention relates to a multistep reduction gear featuring an input shaft (3), which is linked to a front-mounted planetary gear set (10), an output shaft (4), which is linked to a main planetary gear set (30), and several shifting components (A through E), selective closing of which permits the shifting of six forward gears and the transmission of a transmission input speed (n_input) of the input shaft (3) to the output shaft (4) in such a way that of all the shifting components activated only one shifting component is opened and another shifting component is closed for next-higher or next-lower gearshifts;
- with the main planetary gear set (30) featuring three non-coupled input elements and one output element of the front-mounted planetary gear set (10) being connectable via a first shifting component (A) with the first input element of the main planetary gear set (30) and via a second shifting component (B) with the second input element of the main planetary gear set (30), and the input shaft (3) being connectable via a fifth shifting component (E) with the third input element of the main planetary gear set (30), and one element of the front-mounted planetary gear set (10) being fixed;
- with the front-mounted planetary gear set (10) being a plus transmission with inner and outer planet gears (12, 15), the spiders (14, 17) of which are linked to each other,
- with the coupled spiders (14, 17) of the front-mounted planetary gear set (10) being linked to the input shaft (3);
- with one internal gear (21) of the front-mounted planetary gear set (10) being connectable to the first and the second input element of the main planetary gear set (30), and
- with a center gear (11) of the front-mounted planetary gear set (10) being fixed to a transmission housing (40),
**characterized in that**
- the fifth shifting component (E) is arranged between front-mounted planetary gear set (10) and main planetary gear set (30) - in axial direction immediately adjacent to the front-mounted planetary gear set (10);
- the spiders (14, 17) of the inner and outer planet gears (12, 15) of the front-mounted planetary gear set (10) are linked to each other by a web plate (18);
- one input element of the fifth shifting component (E) is arranged immediately axially adjacent to the web plate (18);
- the web plate (18) is sealed against the input element of the fifth shifting component (E) on a diameter above the bolts (13, 16) of the inner or outer planetary gears (12, 15) of the front-mounted planetary gear set (10);
- lubricant supply (20) to the inner and outer planet gears (12, 15) of the front-mounted planetary gear set (10) is effected via an axial gap between the web plate (18) and the input element of the fifth shifting component (E).

2. A multistep reduction gear according to claim 1, **characterized in that** the front-mounted planetary gear set (10) is arranged near to a transmission housing wall (41) of the transmission housing (40) - in radial direction at least partially above a projection (43) of the transmission housing wall (31) or above a hub, which is firmly connected to the transmission housing wall (41), with the transmission housing wall (41) being designed as part of a transmission housing (40) or as an intermediate disk (42), which is firmly connected to the transmission housing (40), and with the center gear (11) of the front-mounted planetary gear set (10) being actively linked to the projection (43) or the hub (44).

3. A multistep reduction gear according to claim 2, **characterized in that** the transmission housing wall (41) is arranged on that side of the transmission housing (40) which faces the motor shaft (1) of a drive motor of the multistep reduction gear, with the motor shaft being actively linked to a drive shaft (3).

4. A multistep reduction gear according to claim 2, **characterized in that** the transmission housing wall is arranged on that side of the transmission housing which is opposite to a motor shaft of a drive motor of the multistep reduction gear, with the motor shaft being actively linked to a drive shaft.

5. A multistep reduction gear according to one of the claims 1 through 4, **characterized in that** the front-mounted planetary gear set (10) and the first, second and fifth shifting components (A, B, E) are arranged together on one side of the main planetary gear set (30).

6. A multistep reduction gear according to one of the claims 1 through 5, **characterized in that** the first and second shifting components (A, B), especially their disks (50, 70), are arranged axially next to each other.

7. A multistep reduction gear according to one of the claims 1 through 6, **characterized in that** the second shifting component (B) is arranged closer to the main planetary gear set (30) than the first shifting component (A), especially that disks (70) of the second shifting component (B) are arranged closer to the main planetary gear set (30) than disks (50) of the first shifting element (A).

8. A multistep reduction gear according to one of the claims 1 through 7, **characterized in that** the first shifting component (A) is arranged immediately adjacent to the front-mounted planetary gear set (10), especially that the disks (50) of the first shifting component (A) and/or a servo unit (51) of the first shifting component (A) is arranged immediately adjacent to the front-mounted planetary gear set (10).

9. A multistep reduction gear according to one of the daims 1 through 8, **characterized in that** the disks (50) of the first shifting component (A) are arranged at least partially radially above the front-mounted planetary gear set (10) and/or at least partially radially above disks (80) of the fifth shifting component (E).

10. A multistep reduction gear according to one of the claims 1 through 9, **characterized in that** the second shifting component (B) is arranged between the first shifting component (A) and the main planetary gear set (30).

11. A multistep reduction gear according to one of the claims 1 through 10, **characterized in that** the disks (70) of the second shifting component (B) are axially adjacent to the disks (50) of the first shifting component (A) in the direction of the main planetary gear set (30).

12. A multistep reduction gear according to one of the claims 1 through 11, **characterized in that** the disks (70) of the second shifting component (B) are arranged at least partially radially above the fifth shifting component (E).

13. A multistep reduction gear according to one of the claims 1 through 12, **characterized in that** the servo unit (51) of the first shifting component (A) is arranged at least partially on that side of the front-mounted planetary gear set (10) which does not face the main planetary gear set (30), especially radially above the projection (43) of the transmission housing wall (41) or radially above the hub (44) which is connected to the transmission housing wall (41) - adjacent to the front-mounted planetary gear set (10).

14. A multistep reduction gear according to one of the claims 1 through 13, **characterized in that** one input element of the first shifting component (A) is supported on the projection (43) of the transmission housing wall (41) or on the hub (44) which is connected to the transmission housing wall (41).

15. A multistep reduction gear according to one of the claims 1 through 14, **characterized in that** one output element of the first shifting component (A) radially overlaps the fifth shifting component (E) in axial direction.

16. A multistep reduction gear according to one of the claims 1 through 15, **characterized in that** the output element of the first shifting component (A) reaches through a coupling space of the second shifting component (B).

17. A multistep reduction gear according to one of the claims 1 through 16, **characterized in that** the servo unit (51) of the first shifting component (A) is arranged on that side of the disks (50) of the first shifting component (A) which does not face the main planetary gear set (30), especially that the servo unit (51) of the first shifting component (A) actuates the disks (50) of the first shifting component (A) from that side which does not face the main planetary gear set (30).

18. A multistep reduction gear according to one of the claims 1 through 17, **characterized in that** the servo unit (71) of the second shifting component (B) is arranged on that side of the disks (70) of the second shifting component (B) which faces the main planetary gear set (30), especially that the servo unit (71) of the second shifting component (B) actuates the disks (70) of the second shifting component (B) from that side which faces the main planetary gear set (30).

19. A multistep reduction gear according to one of the claims 1 through 18, **characterized in that** the third input element of the main planetary gear set (30) is linked to an output element of the fifth shifting component (E) via a spider shaft (5), that the first input element of the main planetary gear set (30) is linked to an output element of the first shifting component (A) via a first center-gear shaft (6), and that the second input element of the main planetary gear set (30) is linked to an output element of the second shifting component (B) via a second center-gear shaft (7), with the spider shaft (5) extending centrically through the main planetary gear set (30), and with the first center-gear shaft (6) extending between front-mounted and main planetary gear set (10, 30) radially above the spider shaft (5) and/or being supported on it, and with the second center-gear shaft (7) extending between front-mounted and main planetary gear set (10, 30) radially above the first center-gear shaft (6) and/or being supported on it.

20. A multistep reduction gear according to one of the claims 1 through 19, **characterized in that** the main planetary gear set (30) is designed as a Ravigneaux-type planetary gear set, with a small center gear (31) as a first input element, with large center gear (32) as a second input element, with coupled spiders (35, 36) as a third input element, and with an internal gear (37) as an output element of the main planetary gear set (30).

## Revendications

1. Boîte de vitesses à plusieurs rapports dotée d'un arbre d'entrée (3), celui-ci étant lié à un train épicydoïdal monté en amont (10), dotée d'un arbre de sortie (4), celui-ci étant lié à un train épicydoïdal principal (30), dotée de plusieurs éléments de changement de vitesses (A - E), la fermeture sélective desquels permettant d'engager six rapports avant et sachant qu'un régime d'entrée de l'arbre d'entrée (3) de la boite de vitesses (n_entrée) peut être transmis de telle manière sur l'arbre de sortie (4) que, pour le passage d'un rapport au rapport immédiatement supérieur ou immédiatement inférieur, des éléments de changement de vitesses qui viennent d'être actionnés, à chaque fois, n'est ouvert qu'un seul élément de changement de vitesses et fermé un autre élément de changement de vitesses, sachant que
- le train épicycloïdal principal (30) comporte trois éléments d'entrée pas couplés, un élément de sortie du train épicycloïdal monté en amont (10) peut être lié par l'intermédiaire d'un premier élément de changement de vitesses (A) au premier élément d'entrée du train épicycloïdal principal (30) et par l'intermédiaire d'un deuxième élément de changement de vitesses (B) au deuxième élément d'entrée du train épicycloïdal principal (30), sachant que l'arbre d'entrée (3) peut être lié par l'intermédiaire d'un cinquième élément de changement de vitesses (E) au troisième élément d'entrée du train épicydoïdal principal (30) et sachant qu'un élément du train épicycloïdal monté en amont (10) est bloqué;
- le train épicydoïdal monté en amont (10) est réalisé comme une transmission positive comportant des satellites internes et externes (12, 15), dont les nervures (14, 17) sont liées l'une à l'autre ;
- les nervures couplées (14,17) du train épicydoïdal monté en amont (10) sont liées À l'arbre d'entrée (3) ;
- une couronne (21) du train épicydoïdal monté en amont (10) peut être liée au premier et au deuxième élément d'entrée du train épicycloïdal principal (30) et
- un pignon planétaire (11) du train épicydoïdal monté en amont (10) est fixé sur un carter de boîte de vitesses (40),
**caractérisée en ce que**
- le cinquième élément de changement de vitesses (E) est disposé entre le train épicycloïdal monté en amont (10) et le train épicycloïdal principal (30), et **en ce que**, dans le sens axial, cet élément est adjacent au train épicycloïdal monté en amont (10) ;
- les nervures (14,17) des satellites internes et externes (12, 15) du train épicycloïdal monté en amont (10) sont liées l'une à l'autre par l'intermédiaire d'une nervure en tôle (18) ;
- un élément d'entrée du cinquième élément de changement de vitesses (E) est adjacent, en sens axial, à la nervure en tôle (18) ;
- la nervure en tôle (18) est étanchéifiée, au niveau d'un diamètre au-dessus des boulons (13, 16) des satellites internes et/ou externes (12, 15) du train épicycloïdal monté en amont (10), par rapport à l'élément d'entrée du cinquième élément de changement de vitesses (E) et
- **en ce que** l'alimentation en lubrifiant (20) des satellites internes et externes (12, 15) du train épicycloïdal monté en amont (10) est assurée par l'intermédiaire d'une fente axiale entre la nervure en tôle (18) et l'élément d'entrée du cinquième élément de changement de vitesses (E).

2. Boîte de vitesses à plusieurs rapports selon la revendication 1, **caractérisée en ce que** le train épicycloïdal monté en amont (10) est disposé à proximité d'une paroi (41) du carter de la boîte de vitesses (40), à savoir, en sens axial au moins partiellement au-dessus d'une saillie (43) de la paroi du carter de la boîte de vitesses (31) ou d'un moyeu (44) solidaire de la paroi du carter de la boîte de vitesses (41), sachant que la paroi du carter de la boîte de vitesses (41) est réalisée comme une partie d'un carter de boîte de vitesses (40) ou comme une plaque intermédiaire (42) solidaire du carter de la boîte de vitesses (40), et sachant que le pignon planétaire (11) du train épicycloïdal monté en amont (10) est lié fonctionnellement au tenon (43) et/ou au moyeu (44).

3. Boîte de vitesses à plusieurs rapports selon la revendication 2, **caractérisée en ce que** la paroi du carter de la boîte de vitesses (41) est disposée d'un côté du carter de la boîte de vitesses (40) dirigé vers un arbre moteur (1) d'un moteur d'entraînement de la boîte de vitesses à plusieurs rapports étant lié fonctionnellement à l'arbre d'entrée (3).

4. Boîte de vitesses à plusieurs rapports selon la revendication 2, **caractérisée en ce que** la paroi du carter de la boîte de vitesses est disposée du côté du carter de la boîte de vitesses étant opposé à un arbre moteur d'un moteur d'entraînement d'une boîte de vitesses à plusieurs rapports et lié fonctionnellement à l'arbre d'entrée.

5. Boîte de vitesses à plusieurs rapports selon une des revendications 1 à 4, **caractérisée en ce que** le train épicycloïdal monté en amont (10) et le premier, le deuxième et le cinquième élément de changement de vitesses (A, B, E) sont disposés ensemble sur un côté du train épicycloïdal principal (30).

6. Boîte de vitesses à plusieurs rapports selon une des revendications 1 à 5, **caractérisée en ce que** le premier et le deuxième élément de changement de vitesses (A, B), et en particulier leurs disques (50, 70), sont juxtaposés axialement.

7. Boîte de vitesses à plusieurs rapports selon une des revendications 1 à 6, **caractérisée en ce que** le deuxième élément de changement de vitesses (B) est disposé plus près du train épicycloïdal principal (30) que le premier élément de changement de vitesses (A), et, en particulier, **en ce que** les disques (70) du deuxième élément de changement de vitesses (B) sont disposés plus près du train épicycloïdal principal (30) que les disques (50) du premier élément de changement de vitesses (A).

8. Boîte de vitesses à plusieurs rapports selon une des revendications 1 à 7, **caractérisée en ce que** le premier élément de changement de vitesses (A) est disposé immédiatement à proximité du train épicycloïdal monté en amont (10), et, en particulier, **en ce que** les disques (50) du premier élément de changement de vitesses (A) et/ou d'un dispositif servo (51) du premier élément de changement de vitesses (A) sont disposés immédiatement à proximité du train épicycloïdal monté en amont (10).

9. Boîte de vitesses à plusieurs rapports selon une des revendications 1 à 8, **caractérisée en ce que** les disques (50) du premier élément de changement de vitesses (A) sont disposés au moins partiellement en sens radial au-dessus du train épicycloïdal monté en amont (10) et/ou au moins partiellement en sens radial au-dessus des disques (80) du cinquième élément de changement de vitesses (E).

10. Boîte de vitesses à plusieurs rapports selon une des revendications 1 à 9, **caractérisée en ce que** le deuxième élément de changement de vitesses (B) est disposé entre le premier élément de changement de vitesses (A) et le train épicycloïdal principal (30).

11. Boîte de vitesses à plusieurs rapports selon une des revendications 1 à 10, **caractérisée en ce que** les disques (70) du deuxième élément de changement de vitesses (B) sont adjacents, en sens axial et en direction du train épicycloïdal principal (30), aux disques (50) du premier élément de changement de vitesses (A).

12. Boîte de vitesses à plusieurs rapports selon une des revendications 1 à 11, **caractérisée en ce que** les disques (70) du deuxième élément de changement de vitesses (B) sont disposés, au moins partiellement, en sens radial au-dessus du cinquième élément de changement de vitesses (E).

13. Boîte de vitesses à plusieurs rapports selon une des revendications 1 à 12, **caractérisée en ce que** le dispositif servo (51) du premier élément de changement de vitesses (A) est disposé, au moins partiellement, du côté du train épicycloïdal monté en amont (10) opposé au train épicycloïdal principal (30), et **en ce qu'**il est, en particulier, disposé, respectivement, en sens radial au-dessus de la partie en saillie (43) de la paroi du carter de la boîte de vitesses (41) et en sens radial au-dessus du moyeu (44) lié à la paroi du carter de la boîte de vitesses (41) et adjacent au train épicycloïdal monté en amont (10).

14. Boîte de vitesses à plusieurs rapports selon une des revendications 1 à 13, **caractérisée en ce que** un élément d'entrée du premier élément de changement de vitesses (A) est logé, respectivement, sur la partie en saillie (43) de la paroi du carter de la boîte de vitesses (41) et sur le moyeu (44) lié à la paroi du carter de la boîte de vitesses (41).

15. Boîte de vitesses à plusieurs rapports selon une des revendications 1 à 14, **caractérisée en ce que** un élément de sortie du premier élément de changement de vitesses (A) recouvre le cinquième élément de changement de vitesses (E) radialement en sens axial.

16. Boîte de vitesses à plusieurs rapports selon une des revendications 1 à 15, **caractérisée en ce que** l'élément de sortie du premier élément de changement de vitesses (A) traverse une chambre d'embrayage du deuxième élément de changement de vitesses (B).

17. Boîte de vitesses à plusieurs rapports selon une des revendications 1 à 16, **caractérisée en ce que** le dispositif servo (51) du premier élément de changement de vitesses (A) est disposé sur le côté des disques (50) du premier élément de changement de vitesses (A) opposé au train épicycloïdal principal (30), et, en particulier, **en ce que** le dispositif servo (51) du premier élément de changement de vitesses (A) actionne les disques (50) du premier élément de changement de vitesses (A) à partir de leur côté opposé au train épicycloïdal principal (30).

18. Boîte de vitesses à plusieurs rapports selon une des revendications 1 à 17, **caractérisée en ce que** le dispositif servo (71) du deuxième élément de changement de vitesses (B) est disposé sur le côté des disques (70) du deuxième élément de changement de vitesses (B) dirigé vers le train épicycloïdal principal (30), et, en particulier, **en ce que** le dispositif servo (71) du deuxième élément de changement de vitesses (B) actionne les disques (70) du deuxième élément de changement de vitesses (B) à partir de leur côté dirigé vers le train épicycloïdal principal (30).

19. Boîte de vitesses à plusieurs rapports selon une des revendications 1 à 18, **caractérisée en ce que** le troisième élément d'entrée du train épicycloïdal principal (30) est lié, par l'intermédiaire d'un arbre à croisillon (5) à un élément de sortie du cinquième élément de changement de vitesses (E), **en ce que** le premier élément d'entrée du train épicycloïdal principal (30) est lié, par l'intermédiaire d'un premier pignon planétaire (6) à un élément de sortie du premier élément de changement de vitesses (A), et **en ce que** le deuxième élément d'entrée du train épicycloïdal principal (30) est lié, par l'intermédiaire d'un deuxième pignon planétaire (7), à un élément de sortie du deuxième élément de changement de vitesses (B), sachant que l'arbre à croisillon (5) traverse centralement le train épicycloïdal principal (30), et sachant que le premier pignon planétaire (6) est disposé radialement au-dessus de l'arbre à croisillon (5) entre le train épicycloïdal monté en amont et le train épicycloïdal principal (10, 30) et/ou **en ce qu'**il y est logé sur palier, et sachant que le deuxième pignon planétaire (7), entre le train épicycloïdal monté en amont et le train épicycloïdal principal (10, 30), est disposé radialement au-dessus du premier pignon planétaire (6) et/ou **en ce qu'**il y est logé sur palier.

20. Boîte de vitesses à plusieurs rapports selon une des revendications 1 à 19, **caractérisée en ce que** le train épicycloïdal principal (30) est réalisé comme un train planétaire du type Ravigneaux, doté d'un petit pignon planétaire (31) en tant que premier élément d'entrée, d'un grand pignon planétaire (32) en tant que deuxième élément d'entrée, de nervures couplées (35, 36) en tant que troisième élément d'entrée, ainsi que d'une couronne (37) en tant qu'élément de sortie du train épicycloïdal principal (30).
